(19) Europäisches Patentamt
European Patent Office
Office européen des brevets

(11) **EP 2 541 984 A1**

(12) **EUROPEAN PATENT APPLICATION**
published in accordance with Art. 153(4) EPC

(43) Date of publication:
**02.01.2013 Bulletin 2013/01**

(51) Int Cl.:
*H04W 28/18* (2009.01)     *H04L 27/00* (2006.01)

(21) Application number: **11747367.8**

(22) Date of filing: **23.02.2011**

(86) International application number:
**PCT/JP2011/053933**

(87) International publication number:
**WO 2011/105407 (01.09.2011 Gazette 2011/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2010 JP 2010037097**

(71) Applicant: **NEC Corporation
Tokyo 108-8001 (JP)**

(72) Inventor: **MARU, Tsuguo
Tokyo 108-8001 (JP)**

(74) Representative: **MacDougall, Alan John Shaw et al
Mathys & Squire LLP
120 Holborn
London
EC1N 2SQ (GB)**

(54) **WIRELESS BASE STATION AND ADAPTIVE MODULATION CONTROL METHOD THEREOF**

(57) A base station employs adaptive modulation to connect to a wireless terminal. The base station has first processing means and second processing means. The first processing means decides the target value of the total number of bits of traffic to said wireless terminal, the target value being mapped to radio resources. The second processing means decides the modulation scheme for said wireless terminal according to the adaptive modulation such that the total number of bits to be transmitted is restricted based on said target value, blank resources of said radio resources are decreased, and the transmission power density becomes constant and small.

Fig.3

**Description**

TECHNICAL FIELD

The present invention relates to a base station that adaptively controls a modulation scheme and a coding scheme based on which the base station is connected to a wireless terminal, in particular, to power saving for such a base station.

BACKGROUND ART

For a wireless communication system in which channel qualities between a transmitter and a receiver vary with respect to time and place, a technique that adaptively changes modulation schemes based on channel qualities is known. This technique is referred to as adaptive modulation and has been widely implemented in mobile communication systems and wireless local area networks. The theory of adaptive modulation is known and described for example in Non-Patent Literature 1 in detail.

Like the adaptive modulation, adaptive coding that is a technique that adaptively changes coding schemes based on channel qualities is also known. The theory of adaptive coding is also described in Non-Patent Literature 1. Moreover, a technique referred to as adaptive modulation coding in which adaptive modulation and adaptive coding are combined is also known. Adaptive coding and adaptive modulation coding can be basically treated in the same manner from the view point in which schemes are selected based on channel qualities and transmission power changes based on the selected schemes. Next, adaptive modulation will be mainly described. However, if it is not necessary to distinguish adaptive coding from adaptive modulation coding, it is assumed that the term of "adaptive modulation" includes the concepts of "adaptive coding" and "adaptive modulation coding." In this case, it is assumed that the term "modulation scheme" includes "coding scheme" and a combination of "modulation scheme" and "coding scheme."

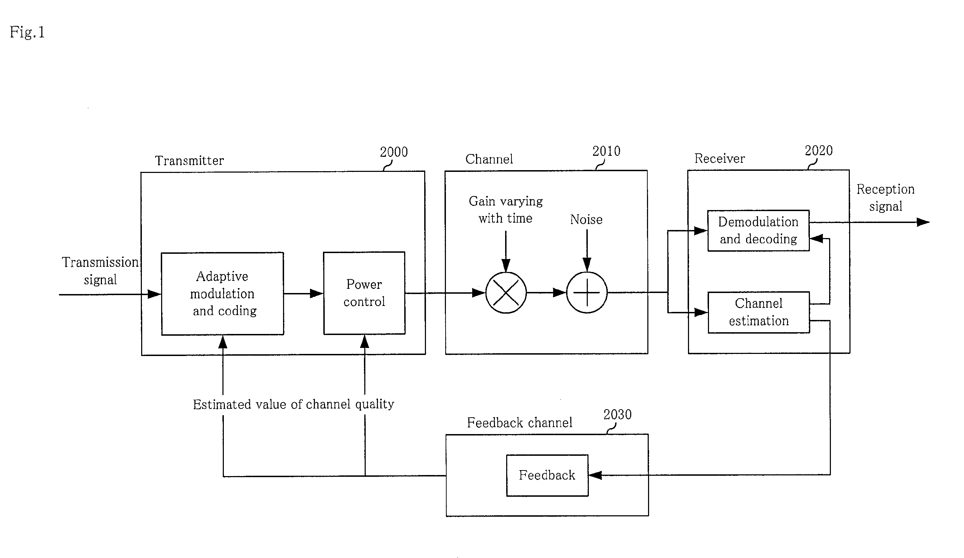

Fig. 1 is a schematic diagram showing a model of a communication system that implements adaptive modulation that will be described in the following. In Fig. 1, when a transmission signal is input to transmitter 2000, it appropriately selects a modulation scheme and a coding rate and modulates and codes the transmission signal based on the selected modulation scheme and coding rate. At this point, transmitter 2000 selects a modulation scheme and a code rate based on an estimation result of a channel quality obtained from receiver 2020 through feedback channel 2030. This channel quality is referred to as CQI (Channel Quality Indicator). In addition, transmitter 2000 selects a modulation scheme and a coding rate such that a desired signal to interference noise ratio (SINR) or a signal to noise ratio (SNR) is satisfied.

While the signal is reaching receiver 2020, power gain, noise, and interference waves that vary with time are added to the signal transmitted from transmitter 2000 over channel 2010, receiver 2020 demodulates and decodes the signal received from transmitter 2000 and thereby extracts the original signal from the reception signal. In addition, receiver 2020 performs channel estimation for the reception signal and transmits information of the obtained channel quality to transmitter 2000 through feedback channel 2030.

In adaptive modulation often implemented in wireless communication, a modulation scheme is selected such that channel capacity becomes maximal. In other words, a modulation scheme that has the largest transinformation (modulation order) per symbol is selected.

For example, it is assumed that SNR required for QPSK modulation in which the transinformation per symbol is 2 [bits] is Z1 (dB), SNR required for 16QAM modulation in which the transinformation per symbol is 4 [bits] is Z2 (dB), and SNR required for 64QAM modulation in which the transinformation per symbol is 6 [bits] is Z3 (dB) and that the relationship of $Z1 < Z2 < Z3$ is satisfied.

If SNR of channel 2010 is equal to or greater than Z3, any of QPSK modulation, 16QAM modulation, and 64QAM modulation can be applied. At this point, if 16QAM modulation is applied, a channel capacity that is two times greater than QPSK modulation can be obtained; if 64QAM modulation is applied, a channel capacity that is three times greater than QPSK can be obtained. Thus, 64QAM modulation is generally selected. If SNR is good, by increasing the modulation order that depends on a modulation scheme and a coding rate, the average throughput can be improved.

When SNR is good, although by increasing the modulation order, the average throughput is improved, by decreasing the modulation order, the transmission power can be reduced. For example, if 16QAM modulation or QPSK modulation is applied instead of 64QAM modulation, the transmission power can be reduced by Z3 - Z2 [dB] or Z3 - Z1 [dB], respectively. As a result, power saving of wireless communication can be accomplished.

A technique that implements adaptive modulation to accomplish power saving of a base station is disclosed in Patent Literature 1. In the technique disclosed in Patent Literature 1, power saving is accomplished by decreasing the modulation order if the amount of data to be transferred is less than a predetermined threshold or if the amount of radio resources that can be used to forward data is equal to or greater than a predetermined value.

In addition, Patent Literature 1 describes that by partly stopping either or both of a transmission section and a reception section in a time zone other than a busy time zone, power saving is accomplished. Moreover, Patent Literature 1 describes that if the amount of data that are forwarded is equal to or greater than a predetermined threshold, by increasing the modulation order, the channel capacity is increased.

On the other hand, Non-Patent Literature 2 discloses a technique that adaptively changes the levels of modulation and coding scheme (MCS) (MCS levels) over an uplink channel of a wireless communication system according to the IEEE 802.16 standard so as to control power saving. These MCS levels correspond to modulation schemes and coding schemes.

Non-Patent Literature 2 describes that if the use rate of channel capacity, namely the use rate of subframes transmitted on uplink is low, power saving is controlled in two stages of Expand Scheme and Replacement Scheme.

First, in Expand Scheme, mobile terminals in which transmission power can be decreased as much as possible are successively selected from among a plurality of mobile terminals. Thereafter, the MCS levels of the selected mobile terminals are changed and then modulation orders with which the transmission power of the mobile terminals become minimal are applied. The power saving control in Expand Scheme is continued until the channel capacity becomes full or until the MCS levels of all the mobile terminals are changed. Thereafter, the power saving control is performed in Replacement Scheme.

In Replacement Scheme, any two mobile terminals are selected and their MCS levels are changed if the channel capacity of the entire cell does not exceed its limit and if the transmission power can be decreased.

RELATED ART LITERATURE

PATENT LITERATURE

    Patent Literature 1: JP2008-252282A Publication

NON-PATENT LITERATURE

    Non-Patent Literature 1: Andrea Goldsmith, "Goldsmith Wireless Communication Engineering," Maruzen, 2007, pp 369-389.
    Non-Patent Literature 2: W. Kim, J. Yoon, J. Baek, Y. Suh, "Power Efficient Uplink Resource Allocation Schemes in IEEE 802.16 OFDMA Systems," IEICE Transactions on Communications, Vol. E92-B, No. 9, pp. 2891-2902, 2009.09.

SUMMARY OF THE INVENTION

PROBLEM TO BE SOLVED BY THE INVENTION

Generally, wireless terminals having a variety of channel qualities co-exist in a wireless cell of a mobile communication system or the like. Applicable modulation orders vary with wireless terminals. In addition, the capacity in which a wireless cell accommodates wireless terminals varies with time. Thus, it is necessary to adequately set the modulation orders to individual wireless terminals so as to prevent congestion and minimize power consumption.

As described above, in the technique described in Patent Literature 1, when the load of radio resources imposed on a base station is low, modulation schemes in which the modulation orders are low are selected for the base station and wireless terminals. However, Patent Literature 1 does not describe a method that selects the wireless terminal of a wireless terminal group that has a variety of channel qualities required to change their modulation schemes. Thus, there is a case in which the transmission power cannot be totally reduced most effectively.

In addition, increases of modulation orders tend to exponentially increase required transmission power and SNR. Thus, as long as gain and interference of the channel are constant, it is preferred that the number of wireless terminals that use modulation schemes having modulation orders be decreased as much as possible so as to reduce the transmission power.

As described above, in the technique described in Non-Patent Literature 2, if the channel capacity is sufficient, the modulation orders of wireless terminals that have the most sufficient reduction margins of transmission power are successively changed. However, even if wireless terminals have the most sufficient reduction margins of transmission power, transmission power cannot always be effectively reduced. Thus, there is a case in which the transmission power cannot be effectively reduced.

In Replacement Scheme of the power saving control described in Non-Patent Literature 2, modulation orders that allow power reduction to be reduced are searched for any two wireless terminals. However, if the number of wireless terminals increases, the number of combinations of modulation orders also increases and thereby the calculation amount increases. In addition, since the combinations are selected regardless of whether or not they are effective for the reduction of transmission power, modulation orders may not be always changed for appropriate combinations that are effective to reduce the transmission power.

An object of the present invention is to reduce transmission power of a base station that connects a plurality of wireless terminals according to adaptive modulation.

MEANS THAT SOLVE THE PROBLEM

To accomplish the foregoing object, a base station of the present invention is a base station that connects a wireless terminal according to adaptive modulation, comprising:

first processing means that decides a target value of the total number of bits of traffic to said wireless terminal, the target value being mapped to radio resources; and
a second processing means that decides a modulation scheme for said wireless terminal according to the adaptive modulation such that the total number of bits to be transmitted is restricted based on said target value, blank resources of said radio resources are decreased, and transmission power density becomes constant and small.

A control method of the present invention is an adaptive modulation control method for a base station that connects a wireless terminal according to adaptive modulation, comprising:

deciding a target value of the total number of bits of traffic to said wireless terminal, the target value being mapped to radio resources; and
deciding a modulation scheme for said wireless terminal according to the adaptive modulation such that the total number of bits to be transmitted is restricted based on said target value, blank resources of said radio resources are decreased, and a transmission power density becomes constant and small.

BRIEF DESCRIPTION OF DRAWINGS

[Fig. 1] is a schematic diagram showing a model of a communication system that performs adaptive modulation.
[Fig. 2] is a block diagram showing a basic structure of a system according to the embodiment.
[Fig. 3] is a block diagram showing a basic structure of a base station according to the embodiment.
[Fig. 4] is a schematic diagram showing a structure of radio resources.

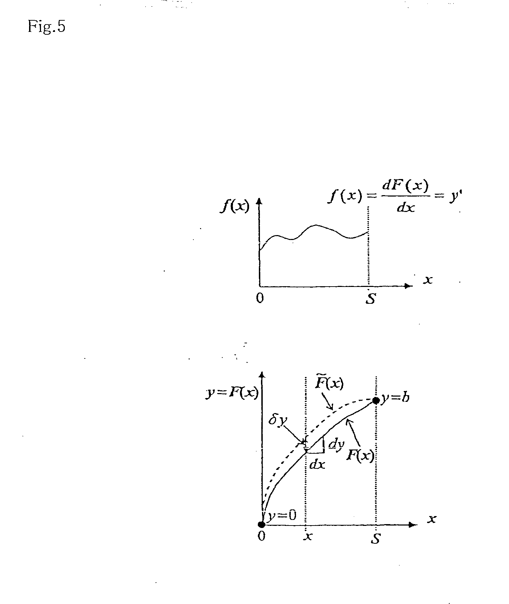

[Fig. 5] is a schematic diagram describing a functional and its variation.
[Fig. 6] is a schematic diagram showing mapping of modulation schemes to radio resources according to ordinary adaptive modulation.
[Fig. 7] is a schematic diagram showing adaptive modulation that accomplishes power saving.
[Fig. 8A] is a schematic diagram describing an example in which this theory is applied.
[Fig. 8B] is a schematic diagram describing the example in which this theory is applied.
[Fig. 9A] is a schematic diagram describing a second example in which this theory is applied.
[Fig. 9B] is a schematic diagram describing the second example in which this theory is applied.
[Fig. 10] is a schematic diagram describing a structure of a system according to the embodiment.
[Fig. 11] is a schematic diagram describing a structure of a base station according to the embodiment.
[Fig. 12] is a schematic diagram showing a functional structure of a mapping section.
[Fig. 13] is a schematic diagram describing an example of a mapping operation.
[Fig. 14] is a flow chart showing an example of an operation of mapping section 103 in which primary mapping section 201 and secondary mapping section 202 successively try to execute processes.
[Fig. 15] is a schematic diagram describing equalizing with respect to time.
[Fig. 16] is a table comparing transmission powers in transmission method (1) and transmission method (2) of Fig. 15.
[Fig. 17] is a graph showing a simulation result that represents an effect of power saving.
[Fig. 18] is a table showing MCS used for simulations.

BEST MODE THAT CARRIES OUT THE INVENTION

Next, with reference to the accompanying drawings, an embodiment of the present invention will be described in detail.

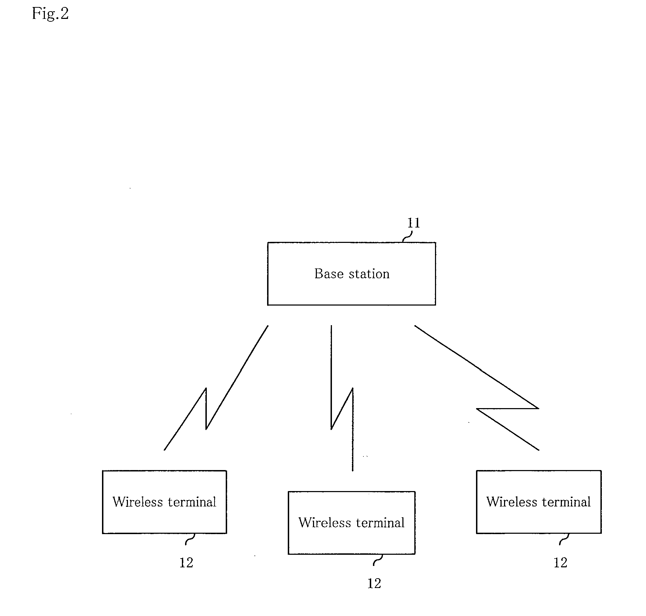

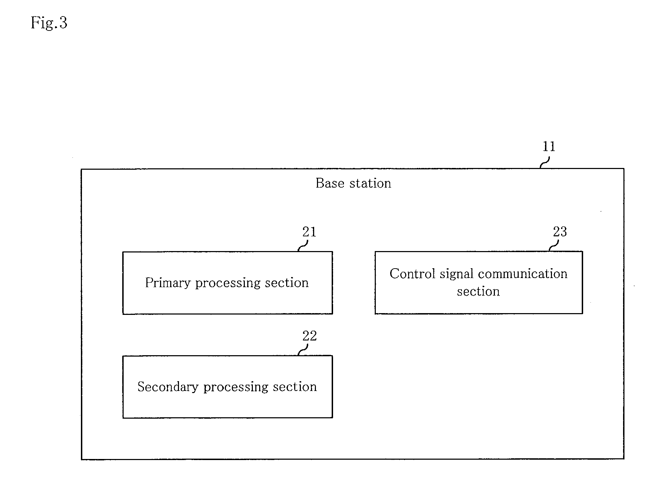

Fig. 2 is a block diagram showing a basic structure of a system according to the embodiment. Referring to Fig. 2, a mobile communication system according to the embodiment has base station 11 and wireless terminals 12. Fig. 3 is a block diagram showing a basic structure of the base station according to the embodiment. Referring to Fig. 3, base station 11 has primary processing section 21 and secondary processing section 22.

This embodiment is assumed to be a mobile communication system in which base station 11 communicates with wireless terminals 12 using radio resources. In base station 11, primary processing section 21 performs preliminary adaptive modulation process. Thereafter, if blank resources occur in radio resources, secondary processing section 22 performs secondary adaptive modulation such that the blank resources are used, the total number of transmission bits is restricted, and the transmission power density becomes constant and small. Thus, the transmission power of the base station can be effectively reduced.

Although primary processing section 21 performs adaptive modulation, the present invention is not limited thereto. Alternatively, primary processing section 21 may refer to a predetermined table and thereby directly decide the total number of bits (namely, the total number of bits targeted by secondary processing section 22) based on the amount of traffic for wireless terminals 12 or the queue length of the buffer without having to performing adaptive modulation and mapping.

Alternatively, primary processing section 21 may perform preliminary adaptive modulation process based on channel quality information. On the other hand, secondary processing section 22 may perform secondary adaptive modulation such that the blank resources are also used, the transmission power density becomes constant and small, and the total number of bits obtained from the second adaptive modulation based on the channel quality becomes close to that of the preliminary adaptive modulation process. In this case, the modulation orders of wireless terminals 12 can be decreased corresponding to the channel qualities (CQI).

Alternatively, secondary processing section 22 may successively try to control adaptive modulation for a plurality of wireless terminals having different channel qualities such that the total number of bits obtained from the secondary adaptive modulation matches that obtained from the preliminary adaptive modulation process. Thus, using the total number of bits mapped in the preliminary adaptive modulation process according to an ordinary technique or the like and adding the secondary adaptive modulation, power saving can be accomplished.

Alternatively, when secondary processing section 22 successively tries to control adaptive modulation for a plurality of wireless terminals 12, secondary processing section 22 may maintain modulation schemes decided by primary processing section 21 for wireless terminals whose priorities are greater than a predetermined threshold. As a result, since the scheduling metrics of wireless terminals that wait until their statuses improve rise and thereby their priories rise, when resources are allocated to base station 11 that are waiting and that have higher priorities, base station 11 can transmit data to the wireless terminals without having to lower the transmission power density.

Alternatively, base station 11 may have control signal communication section 23 that transmits a downlink control signal that represents the difference of the power density of a transmission pilot signal and the transmission power density obtained by secondary processing section 22 to wireless terminals 12. As a result, since wireless terminals 12 are notified of the difference of the power of the pilot signal and power of the channel over which data are carried as a control result of adaptive modulation such that the transmission power density becomes constant and small, wireless terminals 12 can adequately perform a demodulation process.

Alternatively, primary processing section 21 may decide blank resources or the ratio of usable radio resources to the whole radio resources based on the amount of traffic for wireless terminals 12 and decide the total number of bits to be mapped to the usable radio resources and transmitted. As a result, since primary processing section 21 can adequately decide the total number of bits as a restriction condition, primary processing section 21 can adequately perform secondary adaptive modulation.

Alternatively, primary processing section 21 may decide blank resources or the ratio of the usable radio resources to the whole radio resources based on the queue length of a transmission buffer that temporarily stores data to be transmitted and decide the total number of bits to be mapped to the usable radio resources and transmitted. As a result, primary processing section 21 can easily obtain the amount of traffic from the queue length of the transmission buffer and use the amount of traffic as a restriction condition.

Alternatively, secondary processing section 22 may control adaptive modulation such that the transmission power density becomes a constant value in a predetermined range. As a result, even if values in which the transmission power density becomes are discrete, since secondary processing section 22 controls the transmission power density in a constant range, secondary processing section 22 can control the transmission power density such that the transmission power is effectively reduced.

Next, from a theoretical perspective, this embodiment of the present invention will be described.

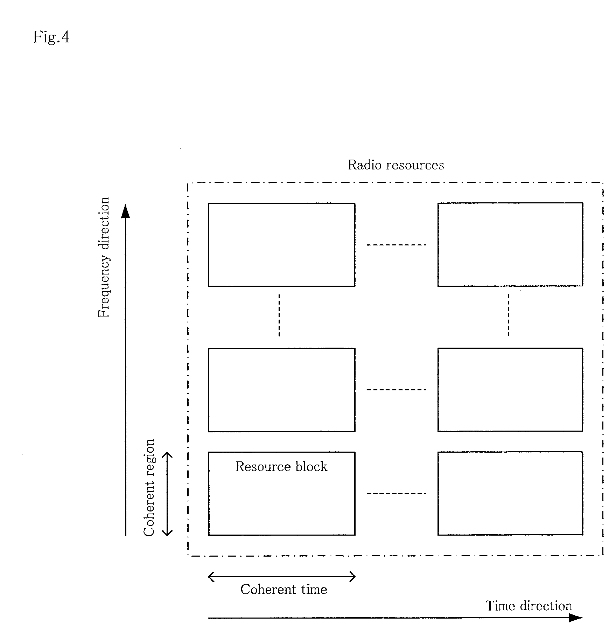

It is assumed that states of transmission paths (channel qualities) such as channel gains and interference components vary with radio resources. Specifically, in the OFDM (Orthogonal Frequency Division Multiplex) scheme, the regions of radio resources are defined in the frequency direction and the time direction as shown in Fig. 4. The radio resources are divided into coherent regions in the frequency direction and into coherent times in the time direction. In this example, the expression " radio resources are interchangeable with resource blocks" is used. Mapped to the resource blocks are modulation schemes (MCS or the like) for wireless terminals decided by adaptive modulation.

Each of the resource blocks contains at least one sub-carrier and also contains at least one symbol in the time direction. It is assumed that channel gains and interference components are nearly constant in each resource block. Scheduling and mapping are performed on a basis of resource blocks.

According to this embodiment, although the power consumption of the base station can be effectively reduced, the minimum power amount, namely optimum power saving is proved in a continuous system. In a real system, a discrete system is strictly used. However, the difference between the continuous system and discrete system is treated as an error that occurs in quantization from the continuous system to the discrete system.

It is assumed that when information having the total amount of information b [bits] is transmitted over resource blocks having the number of resource blocks S, resource block x transmits f(x) transmission bits having the number of transmission bits f(x) where x is an ordinal number of resource blocks that are developed in the frequency direction and the time direction and then the f(x) transmission bits are discretely and one-dimensionally rearranged.

Since the total amount of information that is transmitted from a wireless cell, namely, a base station, is b.

## [Mathematical Expression 1]

$$b = \int_0^S f(x)dx \quad (1)$$

assuming that the total amount of information b [bits] is constant, a restriction condition in which b of Formula (1) is constant can be obtained.

In addition, its integration is defined as the following formula.

## [Mathematical Expression 2]

$$y = F(x) = \int_0^x f(x)dx \quad (2)$$

From the relationship of the foregoing S, x, and b, the following formula can be obtained.

## [Mathematical Expression 3]

$$\begin{cases} F(0) = 0 \\ F(S) = b \end{cases} \quad (3)$$

Under the foregoing conditions, the amount of power consumption J is defined as follows using bit-correlated consumption function G(f) that represents the power that a bit-based transmission power amplifier consumes corresponding to the number of bits to be transmitted.

## [Mathematical Expression 4]

$$J = \int_0^S \frac{G(f(x))}{P_h(x)}dx = \int_0^S \frac{G(y')}{P_h(x)}dx \quad \text{where} \quad f(x) = y' = \frac{dF(x)}{dx} \quad (4)$$

where Ph(x) is a channel gain equivalent to power. Ph(x) is reversely proportional to transmission power.

[Mathematical Expression 5]

$$\frac{G(f(x))}{P_a(x)} \quad (5)$$

The power consumed by a transmission power amplifier in resource block x can be expressed is given by the preceding expression.

Fig. 4 shows f(x), y=F(x), an example of functional

[Mathematical Expression 6]

$$\overline{F}(x)$$

and its variation $\delta y$. Under the foregoing conditions, extremal F(x) that minimizes the total amount of power consumption J is obtained using the following functional.

[Mathematical Expression 7]

$$\widetilde{F}(x)$$

Depending on the following functional

[Mathematical Expression 8]

$$\widetilde{\overline{F}}(x)$$

J has various values. However, two points of Formula (6) have been determined from the foregoing restriction condition.

[Mathematical Expression 9]

$$\begin{cases} \widetilde{F}(0) = 0 \\ \widetilde{F}(S) = b \end{cases} \quad (6)$$

Here, the following functional

[Mathematical Expression 10]

$$\widetilde{y} = \widetilde{F}(x) \quad (7)$$

is defined as a comparison function

[Mathematical Expression 11]

$$y = F(x) \quad (8)$$

and also is defined as Formula (9) with a member of the foregoing stationary function that is an extremal.
[Mathematical Expression 12]

$$\bar{y}(x) = y(x) + \varepsilon \cdot \eta(x) \quad (9)$$

From the foregoing,
**[0070]**

[Mathematical Expression 13]

$$\begin{cases} \eta(0) = 0 \\ \eta(S) = 0 \end{cases} \quad (10)$$

is obtained. Thus, the amount of power consumption J for the functional is given by the following formula
[Mathematical Expression 14]

$$\bar{J}(y' + \varepsilon \cdot \eta') = \int_0^S \frac{G(y' + \varepsilon \cdot \eta')}{P_b(x)} dx \quad (11)$$

With the following variation
[Mathematical Expression 15]

$$\bar{J} - J = \frac{\partial J}{\partial \varepsilon} \delta \quad (12)$$

at the following stationary point
[Mathematical Expression 16]

$$\left( \frac{\partial \bar{J}}{\partial \varepsilon} \right)_{\varepsilon=0} = 0 \quad (13)$$

can be obtained. Thus, since the order of differentiation and integration can be exchanged, the following formula can be obtained.
[Mathematical Expression 17]

$$\frac{\partial \tilde{J}(y'+\varepsilon\cdot\eta')}{\partial\varepsilon}\bigg|_{\varepsilon=0} = \frac{\partial\int_0^S G(y'+\varepsilon\cdot\eta')/P_h(x)\,dx}{\partial\varepsilon}\bigg|_{\varepsilon=0} = \int_0^S \left(\frac{\partial G(y'+\varepsilon\cdot\eta')/P_h(x)}{\partial\varepsilon}\right)dx\bigg|_{\varepsilon=0} \quad (14)$$

Here, the following formula is given.
[Mathematical Expression 18]

$$y'(x)+\varepsilon\cdot\eta'(x)=z'(x) \quad (15)$$

Formula (14) can be modified as Formula (16).
[Mathematical Expression 19]

$$\int_0^S \left(\frac{\partial G(y'+\varepsilon\cdot\eta')/P_h(x)}{\partial\varepsilon}\right)dx\bigg|_{\varepsilon=0} = \int_0^S \left(\frac{\partial G(z')/P_h(x)}{\partial z'}\cdot\eta'\right)dx\bigg|_{\varepsilon=0} = 0 \quad (16)$$

From the relationship of integration by parts
[Mathematical Expression 20]

$$uv' = (uv)' - u'v \quad \int(uw) = u(\int w) - \int u'(\int w) \quad (17)$$

the integration given by Formula (16)
[Mathematical Expression 21]

$$\left[\frac{\partial\left(\frac{G(z')}{P_h(x)}\right)}{\partial z'}\cdot\eta\right]_0^S - \int_0^S \left(\frac{\partial^2\left(\frac{G(z')}{P_h(x)}\right)}{\partial x\,\partial z'}\cdot\eta\right)dx \quad (18)$$

can be obtained. From the restriction condition of Formula (6), since

$$\begin{cases} \eta(0)=0 \\ \eta(S)=0 \end{cases} \quad (19)$$

is obtained, the first term of Formula (18) is "0." Thus, it is clear that

[Mathematical Expression 22]

$$\frac{\partial^2 \left( \frac{G(z')}{P_h(x)} \right)}{\partial x \, \partial z'} = 0 \quad (20)$$

needs to be satisfied. Since y' = z',

[Mathematical Expression 23]

$$\frac{\partial^2 \left( \frac{G(y')}{P_h(x)} \right)}{\partial x \, \partial y'} = \frac{\partial^2 \left( \frac{G(f(x))}{P_h(x)} \right)}{\partial x \, \partial f(x)} = 0 \quad (21)$$

can be obtained. Thus, the following formula can be obtained.

[Mathematical Expression 24]

$$\frac{\partial \left( \frac{G(f(x))}{P_h(x)} \right)}{\partial x} = 0 \quad (22)$$

Thus, the foregoing functional becomes an extremal that minimizes the total amount of power consumption J.

In other words, the condition that minimizes the total amount of power consumption J is given

[Mathematical Expression 25]

$$\frac{G(f(x))}{P_h(x)} = Const. \quad (23)$$

by the foregoing formula.

[Mathematical Expression 26]

$$\frac{G(f(x))}{P_h(x)}$$

The foregoing expression represents the power that the transmission power amplifier consumes in resource block x. The total amount of power consumption J becomes minimal when the power that the transmission power amplifier consumes in individual resource blocks is the same. In other words, the transmission power in each resource block x, namely the transmission power density, is constant.

If a real transmission power amplifier rather than an ideal transmission amplifier is used, although it is necessary to add Ph(x) to the foregoing G as

[Mathematical Expression 27]

$$G = \frac{G}{P_h(x)}$$

and consider a similar analyzing process, the foregoing result denotes that the following optimizing condition is constant

[Mathematical Expression 28]

$$G = \frac{G}{P_h(x)}$$

The power consumption corresponding to the transmission power is constant in the real transmission power amplifier. It is clear that when the transmission power density is constant, the total amount of power consumption J becomes minimal.

Although the theory of this embodiment was described, for easy understanding of the theory of the embodiment, a concrete example thereof will be described.

First, it is assumed that channel gains are constant over resource blocks x. Of course, according to this embodiment, frequency band, time, wireless terminals, and so forth are one-dimensionally developed in the x direction. If channel gains and interferences differ in resource blocks x, the total amount of power consumption can be minimized. However, in this example, for the sake of simple description, it is assumed that Ph(x) is constant and omitted. Like the foregoing analysis, the amount of power consumption J in this case can be given by the following formula.

[Mathematical Expression 29]

$$J = \int_s^s G(f(x))dx = \int_s^s G(y')dx \quad where \quad f(x) = y' = \frac{dF(x)}{dx} \quad (24)$$

where G(f) is a bit-correlated consumption function G(f) that represents the power that the transmission power amplifier consumes corresponding to the number of bits f to be transmitted. G(f) can have any form corresponding to a real transmission power amplifier.

Using the foregoing functional

[Mathematical Expression 30]

$$\tilde{y} = \tilde{F}(x)$$

The amount of power consumption J for the functional can be obtained from the foregoing formula

[Mathematical Expression 31]

$$\tilde{y}(x) = y(x) + \varepsilon \cdot \eta(x) \quad (25)$$

as the following formula.
[Mathematical Expression 32]

$$\tilde{J}(y' + \varepsilon \cdot \eta') = \int_0^s G(y' + \varepsilon \cdot \eta') dx \quad (26)$$

At the stationary point as an extremal, the following formula can be obtained.
[Mathematical Expression 33]

$$\left(\frac{\partial \tilde{J}}{\partial \varepsilon}\right)_{\varepsilon = 0} = 0 \quad (27)$$

Since the order of differentiation and integration can be exchanged, the following formula can be obtained.
[Mathematical Expression 34]

$$\frac{\partial \tilde{J}(y' + \varepsilon \cdot \eta')}{\partial \varepsilon}\bigg|_{\varepsilon = 0} = \frac{\partial \int_0^s G(y' + \varepsilon \cdot \eta') dx}{\partial \varepsilon}\bigg|_{\varepsilon = 0} = \int_0^s \left(\frac{\partial G(y' + \varepsilon \cdot \eta')}{\partial \varepsilon}\right) dx\bigg|_{\varepsilon = 0} \quad (28)$$

Using the following formula,
**[0120]**

[Mathematical Expression 35]

$$y'(x) + \varepsilon \cdot \eta'(x) = z'(x) \quad (29)$$

Formula (28) can be modified to Formula (30).
[Mathematical Expression 36]

$$\int_0^s \left(\frac{\partial G(y' + \varepsilon \cdot \eta')}{\partial \varepsilon}\right) dx\bigg|_{\varepsilon = 0} = \int_0^s \left(\frac{\partial G(z')}{\partial z'} \cdot \eta'\right) dx\bigg|_{\varepsilon = 0} = 0 \quad (30)$$

From the relationship of the integration by parts given by Formula (17), the integration of Formula (30) can be expressed as follows.
[Mathematical Expression 37]

$$\left[\frac{\partial G(z')}{\partial z'}\cdot\eta\right]_0^S - \int_0^S\left(\frac{\partial^2 G(z')}{\partial x\,\partial z'}\cdot\eta\right)dx \quad (31)$$

Here, the restriction condition of Formula (10) can be also satisfied.
[Mathematical Expression 38]

$$\begin{cases}\eta(0)=0\\\eta(S)=0\end{cases} \quad (32)$$

Thus, the first term of Formula (31) is "0." As a result, it is clear that the following relationship should be satisfied.
[Mathematical Expression 39]

$$\frac{\partial^2 G(z')}{\partial x\,\partial z'}=0 \quad (33)$$

Since y' = z', the following formula can be obtained.
[Mathematical Expression 40]

$$\frac{\partial^2 G(y')}{\partial x\,\partial y'}=\frac{\partial^2 G(f(x))}{\partial x\,\partial f(x)}=0 \quad (34)$$

Thus, if the following formula is satisfied,
**[0132]**

[Mathematical Expression 41]

$$\frac{\partial G(f(x))}{\partial x}=0 \quad (35)$$

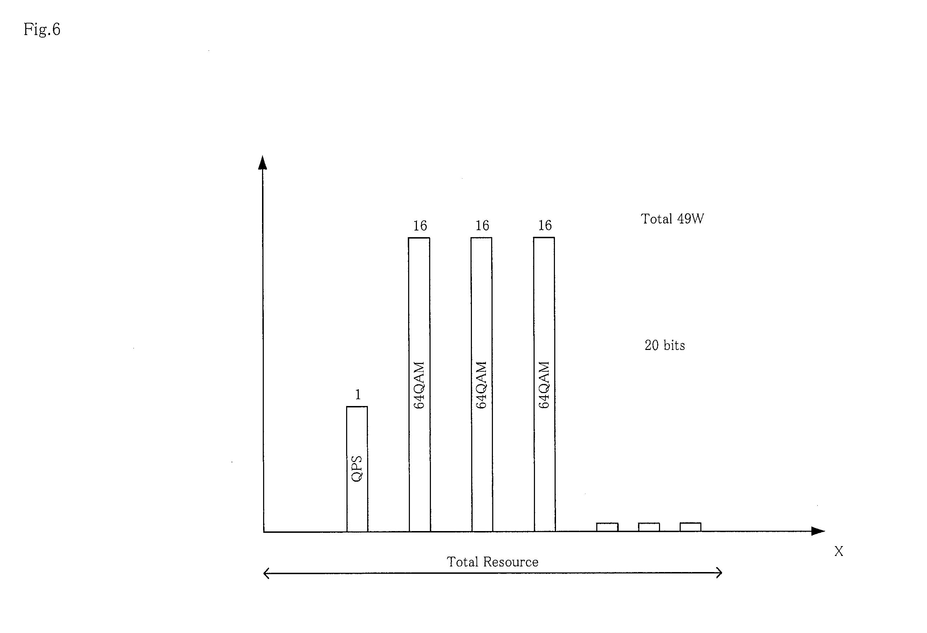

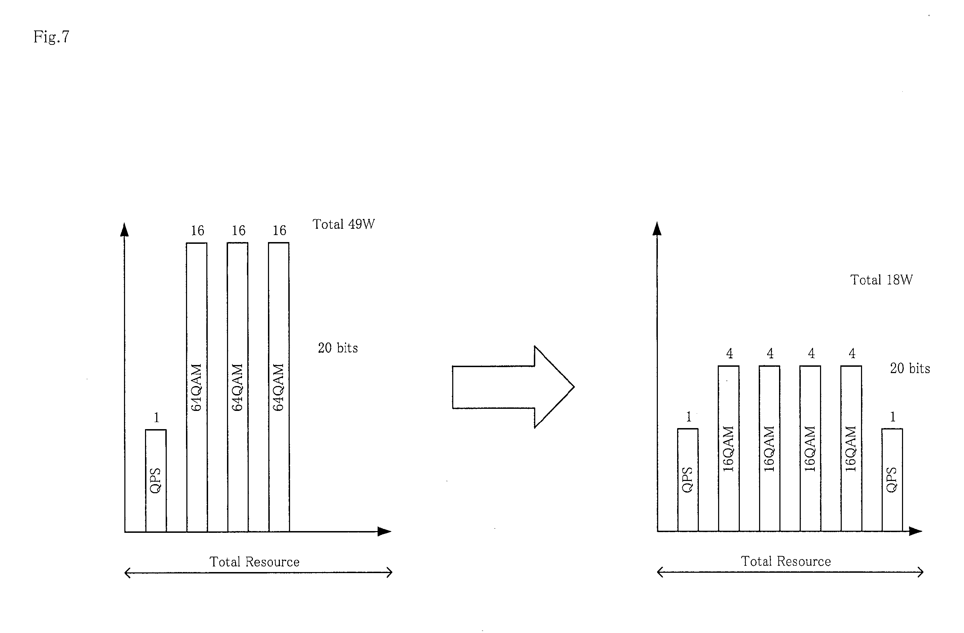

The foregoing functional becomes an extremal that minimizes the total amount of power consumption J. In other words, the condition under which the total amount of power consumption J becomes minimal is when G(f(x)) is constant.
G(f(x)) represents the power that the transmission power amplifier consumes in resource block x. The total amount of power consumption J becomes minimal when the amount of power that the transmission power amplifier consume in individual resource blocks is the same. In other words, the transmission power in resource blocks x is the same, namely the transmission power density, is constant. More specifically, G(f(x)) is a function of the number of transmission bits f(x). Thus, the numbers of transmission bits f(x) in individual resource blocks x are the same, the total amount of power consumption J becomes minimal.
Next, with reference to examples shown in Figs. 6 and 7, mapping of radio resources based on this theory will be described.

It is assumed that modulation schemes have been mapped to radio resources according to the preliminary adaptive modulation process as shown in Fig. 6. Although modulation schemes according to the preliminary adaptive modulation process are not restricted, any known modulation schemes are used. The known modulation schemes are referred to as ordinary modulation schemes. Referring to Fig. 6, QPSK modulation is mapped to the leftmost resource block of the radio resources. QPSK can transmit two bits per symbol with 1 W of power. In addition, it is also assumed that a resource block contains one sub carrier in the frequency direction and one symbol in the time direction. 64QAM modulation is mapped to second to fourth resource blocks. 64QAM can transmit 6 bits per symbol. In these multi-value modulations, the transmission power needs to be increased four times whenever two bits are increased so as to maintain the quality.

Thus, the power required for 64QAM becomes 4 x 4 = 16 W. In the figure, powers (power densities) corresponding to resource blocks are indicated at the top of bars that represent modulation schemes mapped to resource blocks.

The fifth to seventh resource blocks are blank resources. Thus, the total transmission power becomes 1 + 16 + 16 + 16 = 49 [W] and the total number of transmission bits becomes 2 + 6 + 6 + 6 = 20 [bits].

The right side graph of Fig. 7 shows mapping according to the foregoing theory in which power saving is accomplished with the same total number of bits as the foregoing mapping shown in Fig. 6. If the numbers of transmission bits f(x) in resource blocks x according to the foregoing theory are the same, the total amount of power consumption J becomes minimal. Thus, like the right side graph of Fig. 7, using blank resources, the modulation orders are decreased so as to use the same modulation schemes as much as possible. In this example, since there are excessive bits, there are different modulation orders. The manipulation that decreases the modulation orders so as to map the same modulation schemes is the same as the manipulation that causes the transmission power density to become constant and small.

Thus, QPSK is mapped to the first and sixth resource blocks. QPSK can transmit two bits per symbol with 1 W of power. 16QAM is mapped to the second to fifth resource blocks. 16QAM can transmit 4 bits per symbol with 4 W of power.

Thus, the total transmission power becomes 1 + 4 + 4 + 4 + 4 + 1 = 18 [W] and the total number of transmission bits becomes 2 + 4 + 4 + 4 + 4 + 2 = 20 [bits] that is the same as the total number of transmission bits shown in Fig. 6. It is clear that although the total number of transmission bits in the case shown in Fig. 6 is the same as that in the case shown in the right side graph of Fig. 7, the total transmission power of the latter is remarkably decreased from 49 [W] to 18 [W]. In other words, it is clear that when mapping is performed such that the numbers of transmission bits f(x) in resource blocks x become the same, namely the transmission power density becomes constant and small, the total amount of power consumption J becomes minimal.

The foregoing transmission powers are calculated by approximating Shannon's capacity formula based on the information theory in which the transmission power is increased four times whenever two transmission bits are increased. This approximation is referred to as exponential approximation. The transmission power obtained by the exponential approximation corresponds to the amount of power consumption of an ideal transmission power amplifier.

With respect to this point, real transmission power amplifiers are different from real transmission power amplifiers. However, G(f) used in the analysis of the foregoing theory is bit-correlated consumption function G(f) that represents the power that the transmission power amplifier consumes corresponding to the number of transmission bits f and thereby can take any form corresponding to a real transmission power amplifier. Since the solution obtained on the basis of the foregoing theory is an optimal solution in which the total amount of power consumption J obtained under any condition is minimal, it is clear that the foregoing theory can be applied to real transmission power amplifiers.

In the foregoing example, channel gain in each resource block x is constant. In practice, the states of transmission paths, for example, channel gains and interference components vary with resource blocks. In such a case, according to the foregoing theory, when the numbers of transmission bits f(x) in resource blocks x are the same, the total amount of power consumption J becomes minimal can be fully satisfied.

When Formula (23) in which when the transmission power density is constant, the total amount of power consumption J becomes minimal, is satisfied, an optimal solution of states in which channel gains and interference components are different is obtained. Now, the case in which the channel qualities of resource blocks are the same and the case in which they are different are compared. For the sake of simplicity, it is assumed that interference components are contained in channel gain Ph(x).

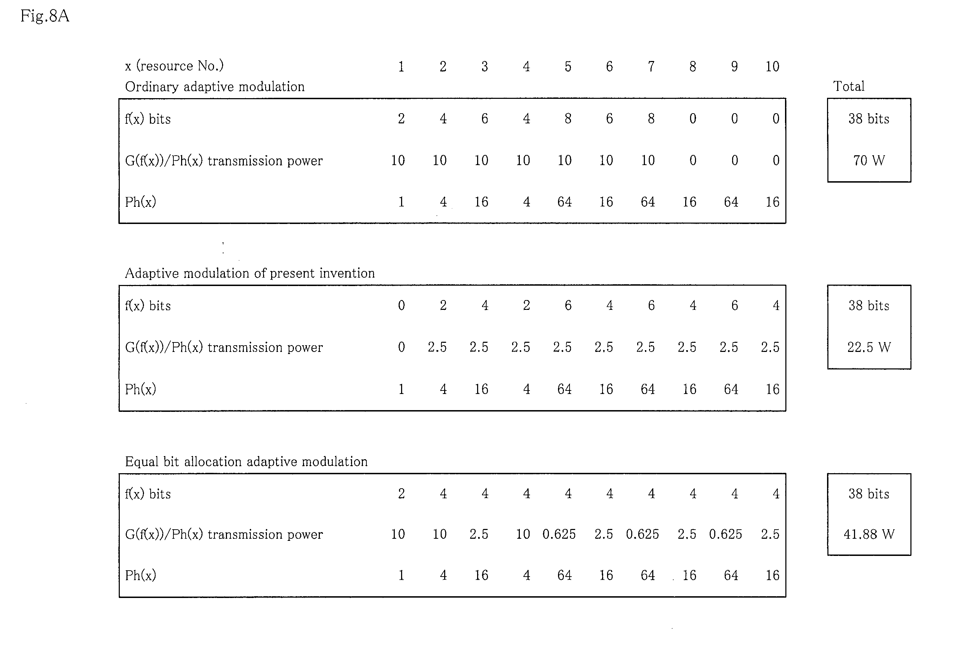

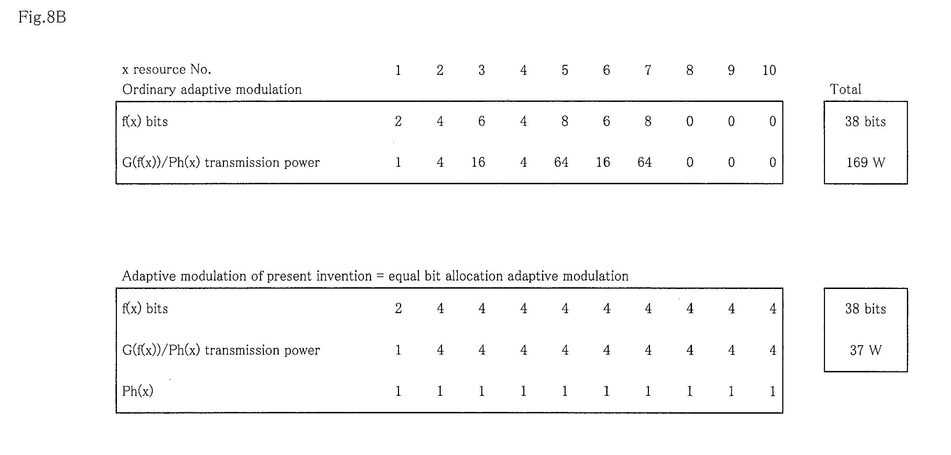

Fig. 8A and Fig. 8B are schematic diagrams describing examples in which the foregoing theory is applied. Fig. 8A is an example of the case in which channel qualities of resource blocks are different, whereas Fig. 8B is an example of the case in which channel qualities of resource blocks are constant.

The upper table of Fig. 8A shows mapping according to the ordinary adaptive modulation in which the total number of transmission bits is 38 [bits] and the total transmission power is 70 [W]. The middle table of Fig. 8A shows mapping according to the adaptive modulation based on the foregoing theory in which the total number of transmission bits is 38 [bits] and the total transmission power is 22.5 [W]. In this case, blank resources are also used and the powers of resource blocks are constant. In other words, modulation schemes in which the modulation orders are decreased and thereby the power density becomes constant and small are mapped to radio resources.

Although the figure does not represent modulation schemes that are used, when the number of transmission bits f(x) is 2, the modulation scheme is QPSK; when f(x) is 4, the modulation scheme is 16QAM; when f(x) is 6, the modulation scheme is 64QAM.

Channel gains Ph(x) vary with resource blocks x. In this example, exponential approximation is used. With resource number x = 2 at the second column of the second table, since f(x) is 2, the modulation scheme is QPSK, G(f (x)) is 10, and Ph(x) is 4. Thus, power G(f(x)) / Ph(x) of the transmission power amplifier is 2.5 [W].

With x = 3 at the third column, since Ph(x) = 16, the channel quality with x = 3 is different from that with x = 2. However, it is clear that f(x) is selected such that the power with x = 3 is the same as the power with x = 2. In other words, since f(x) = 4, 16QAM is used. Thus, since the transmission bits are increased by two bits, G(f(x)) is quadrupled and thereby becomes 40. Thus, G(f(x)) / Ph(x) becomes 2.5 [W].

At the other columns, the modulation orders are decreased such that the total number of transmission bits becomes 38 [bits], which is the same as the case in which the ordinary adaptive modulation is applied. As a result, in the case that in which ordinary adaptive modulation is applied, the total transmission power is 70 [W]. In contrast, in the case in which the adaptive modulation of the present invention is applied, it is clear that the total transmission power is remarkably decreased to 22.5 [W].

With x = 1 at the first column, since the modulation order is decreased such that the transmission power density becomes constant and small, this resource block is not used.

The lower table of Fig. 8A shows mapping according to equal bit allocation adaptive modulation in which the numbers of transmission bits f(x) of resource blocks x are the same and channel gains Ph(x) vary with resource blocks x like those in the upper and middle tables.

With x = 1 at the first column, the number of transmission bits f(x) is 2 for adjustment of the total number of bits, and the modulation scheme is QPSK. However, at the other columns, since bits are equally allocated, f(x) is 4 and the modulation scheme is 16QAM. The total number of transmission bits is 38 [bits], which is the same as that in the case of the ordinary adaptive modulation, and the total transmission power is 41.88 [W]. When the ordinary adaptive modulation is applied, as described in the upper table, since the total transmission power is 70 [W], it is clear that the transmission power is lower than that in the case of the ordinary adaptive modulation. However, since the total transmission power in the case of the adaptive modulation according to the present invention is 22.5 [W], the decrease of the transmission power in the case of the equal bit allocation adaptive modulation is smaller than that in the case of the adaptive modulation according to the present invention. In other words, even if channel qualities are different in individual resource blocks, the power saving in the case in which the modulation schemes are mapped to resource blocks such that the transmission power density becomes constant and small is more effective than in the case in which mapping is performed according to the equal bit allocation adaptive modulation.

Next, the case in which channel qualities are the same in resource blocks, namely AWGN (Additive White Gaussian Noise) channels shown in Fig. 8B will be described.

Since channel gains Ph(x) at all columns are 1, they are omitted. In the mapping according to the ordinary adaptive modulation, the total number of bits is 38 [bits] and the total transmission power is 169 [W]. By contrast, both in the mapping according to the adaptive modulation of the present invention and the mapping according to the equal bit allocation adaptive modulation, the total number of bits is 38 [bits] and the total transmission power is 37 [W]. Thus, it is clear that the total transmission power in the mapping according to the adaptive modulation of the present invention and in the mapping according to the equal bit allocation adaptive modulation is remarkably decreased in comparison with that in the mapping according to the ordinary adaptive modulation.

If channel qualities of resource blocks are the same, when modulation schemes are mapped to radio resources such that the modulation orders are decreased and thereby the powers of resource blocks become constant, namely the power density becomes constant and small, the numbers of transmission bits f(x) allocated to resource blocks become equal. Thus, the power saving effect of the adaptive modulation of the present invention is equal to that of the equal bit allocation adaptive modulation.

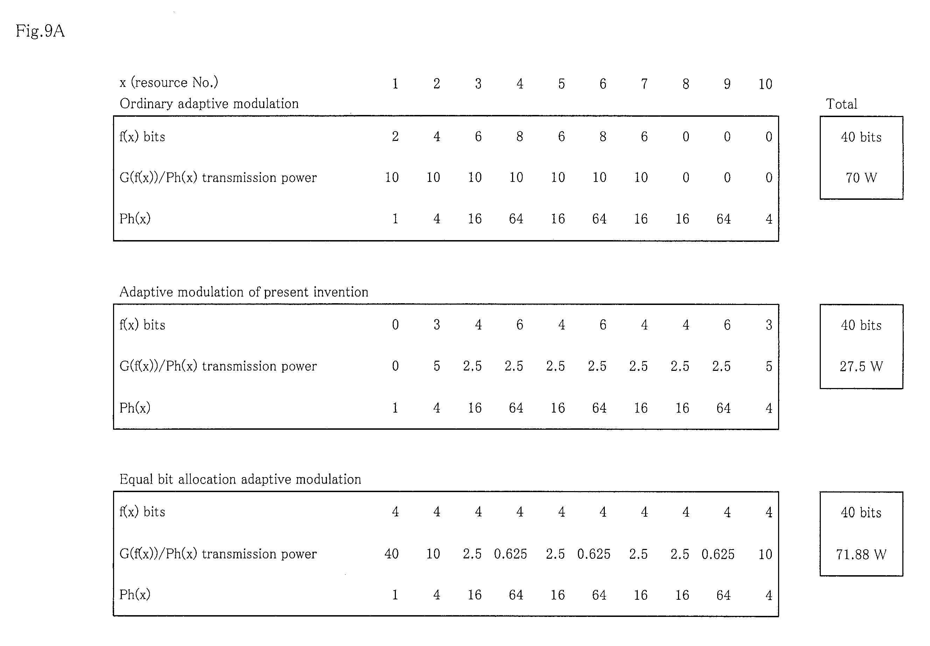

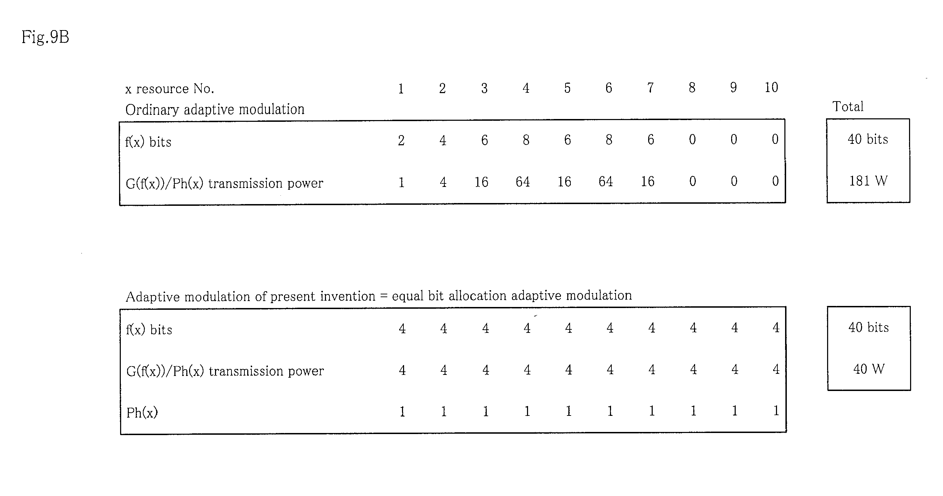

Fig. 9A and Fig. 9B are schematic diagrams describing a second example in a case in which the foregoing theory is applied. Although channel gains Ph(x) in this example are different from those in the example shown in Fig. 8A and Fig. 8B, since the applied schemes in this example are the same as those in the example shown in Fig. 8A and Fig. 8B, a detailed description of this example will be omitted.

In Fig. 9A, when the ordinary adaptive modulation is applied, as represented in the upper table, the total number of transmission bits is 40 [bits] and the total transmission power is 70 [W]. In contrast, as represented in the middle table, when the adaptive modulation of the present invention is applied, the total number of transmission bits is 40 [bits] and the total transmission power is 27.5 [W].

Modulation schemes are mapped to radio resources such that blank resources are used, modulation orders are decreased, and thereby the powers of resource blocks become constant, namely the power density becomes constant and small. In Fig. 9A, since there are excessive bits in the total number of transmission bits, at columns with x = 2 and x = 10, the power of the transmission power amplifier, G(f(x)) / Ph(x), is 5 [W]; at other columns, G(f(x)) / Ph(x) is 2.5 [W] (constant). Since the total transmission power in the case that the adaptive modulation of the present invention is applied is remarkably decreased to 27.5 [W] from 70 [W] in the case in which the ordinary adaptive modulation, in which the modulation orders of the modulation schemes are decreased, is applied while the total number of transmission bits is 40 [bits].

Since the modulation orders are decreased such that the transmission power density becomes constant and small, no modulation scheme is mapped to the resource block with x = 1. Thus, the resource block with x = 1 is not used.

The lower table of Fig. 9A shows that the equal bit allocation adaptive modulation is applied such that the numbers of transmission bits f(x) of resource blocks x become the same. Channel gains Ph(x) that vary with resource blocks x in the case in which the equal bit allocation adaptive modulation is applied are the same as those in the cases where the ordinary adaptive modulation and adaptive modulation of the present invention are applied. While the total number of transmission bits is 40 [bits], modulation schemes are mapped to radio resources such that the modulation orders are decreased as much as possible. As a result, the total transmission power in the case where the ordinary adaptive modulation is applied is slightly increased to 71.88 [W] from 70 [W] in the case that the ordinary adaptive modulation is applied because the same number of bits are transmitted to a resource block having a bad channel quality for example x = 1.

Thus, if channel qualities vary with resource blocks, although the adaptive modulation of the present invention that causes the transmission power density to become constant and small can effectively contribute to power saving, the equal bit allocation adaptive modulation may not effectively contribute to power saving.

Fig. 9B shows the case in which channel qualities of resource blocks are constant, namely AWGN channels.

Since channel gains Ph(x) at all columns are 1, they are omitted. In the mapping according to the ordinary adaptive modulation, the total number of bits is 40 [bits] and the total transmission power is 181 [W]. By contrast, both in the mapping according to the adaptive modulation of the present invention and the mapping according to the equal bit allocation adaptive modulation, the total number of bits is 40 [bits] and the total transmission power is 40 [W]. Thus, it is clear that the total transmission power in the mapping according to the adaptive modulation of the present invention and in the mapping according to the equal bit allocation adaptive modulation is remarkably decreased in comparison with that in the mapping according to the ordinary adaptive modulation.

If channel qualities of resource blocks are the same, when modulation schemes are mapped to radio resources such that the modulation orders are decreased and thereby the powers of resource blocks become constant, namely the power density becomes constant and small, the numbers of transmission bits f(x) allocated to resource blocks become equal. Thus, the power saving effect of the adaptive modulation of the present invention is equal to that of the equal bit allocation adaptive modulation.

Next, a structure of a system and a device for an power saving method that performs adaptive modulation such that blank resources are used and such that the transmission power density becomes constant and small under a restriction condition of the total number of transmission bits transmitted in the frequency direction, time direction, or both the frequency and time directions and maps modulation schemes corresponding to the decreased modulation orders to radio resources will be described.

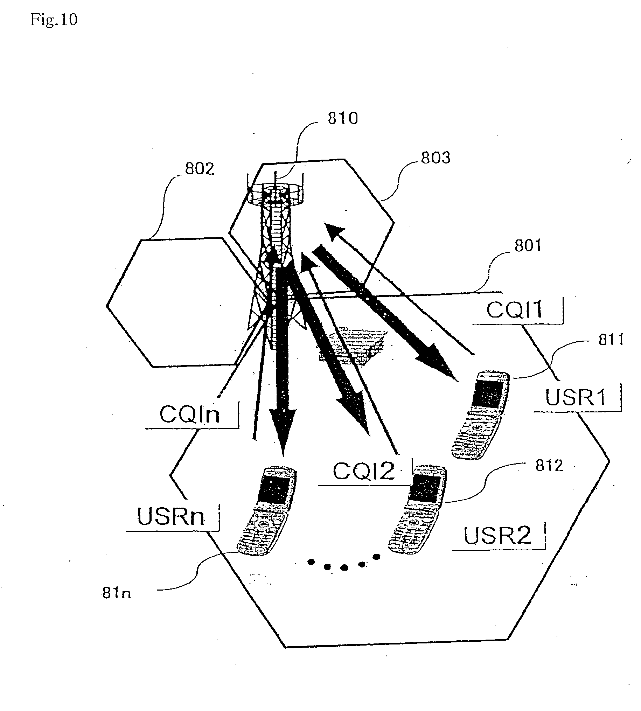

Fig. 10 is a schematic diagram showing a structure of a mobile communication system. Referring to the figure, the mobile communication system has base station 810 and wireless terminals 811 to 81n (USER1 to USERn).

Base station 810 accommodates wireless cells 801 to 803, schedules wireless terminals 811 to 81n for each cell so as to decide communication sequence, modulation scheme, transmission power, and so forth, and maps traffic of wireless terminals 811 to 81n to radio resources.

In the example shown in Fig. 10, wireless terminals 811 to 81n lie in wireless cell 801 and transmit channel quality such as a channel gain and an interference component as CQI information to base station 810. Wireless terminal 810 maps traffic of wireless terminals 811 to 81n to radio resources in wireless cell 801 according to adaptive modulation based on the obtained CQI information.

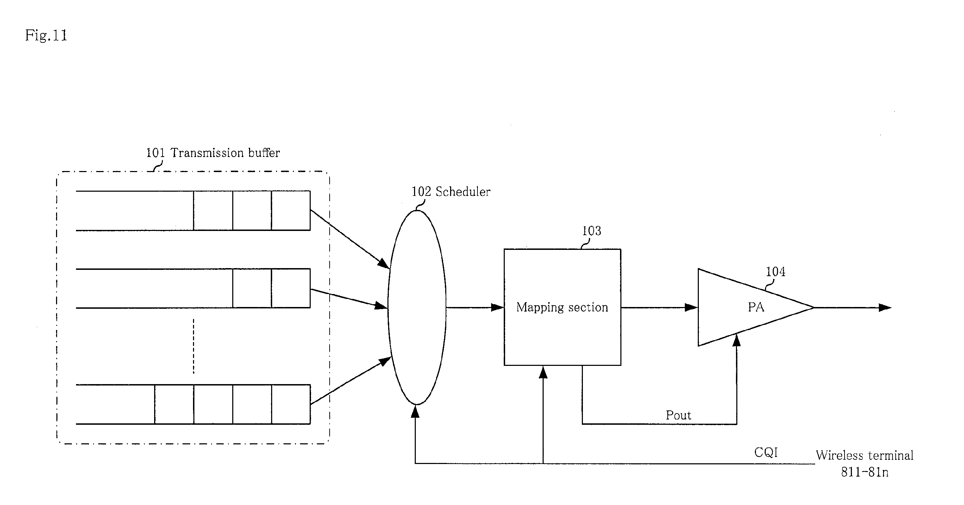

Fig. 11 is a schematic diagram showing an outlined structure of base station 810. Referring to Fig. 11, base station 810 has transmission buffer 101, scheduler 102, mapping section 103, and transmission power amplifier 104.

Transmission buffer 101 temporarily stores data to be transmitted to individual wireless terminals and manages them with their queues.

Scheduler 102 calculates scheduling metrics that are transmission priorities based on the CQI information transmitted from the wireless terminals and transmits data in the order of larger metrics. Specifically, scheduler 102 reads data having larger metrics with higher priorities from transmission buffer 101 and sends the data to mapping section 103.

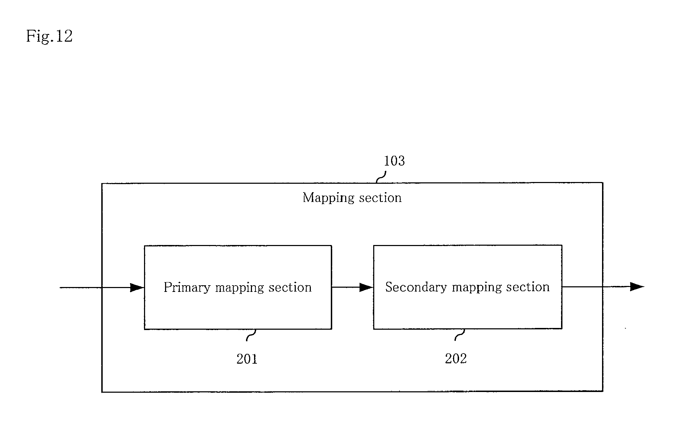

Mapping section 103 has an internal functional structure shown in Fig. 12 such that data sent from scheduler 102 are mapped to radio resources. Referring to Fig. 12, mapping section 103 has primary mapping section 201 and secondary mapping section 202.

In mapping section 103, primary mapping section 201 performs mapping according to an ordinary technique. In this mapping technique, primary mapping section 201 decides modulation schemes applied to individual data pieces according to the ordinary adaptive modulation and decides mapping of data according to the modulation schemes to radio resources.

Thereafter, if there are blank resources in the radio resources in the mapping performed by primary mapping section 201, secondary mapping section 202 performs the mapping again using the blank resources. At this point, secondary mapping section 202 performs adaptive modulation such that the blank resources are also used and such that the total number of transmission bits are restricted in a restriction condition correlated with the total number of transmission bits according to the ordinary adaptive modulation in the frequency direction, the time direction, or both the frequency and time directions, and the transmission power density becomes constant and small. Since relatively high transmission power density is decreased, the modulation orders of the modulation schemes are decreased. Thereafter, mapping section 103 decides mapping of data according to the modulation schemes for which adaptive modulation has been performed again to the radio resources.

Thereafter, secondary mapping section 202 notifies transmission power amplifier 104 of the transmission power level obtained as a result of the secondary mapping.

Transmission power amplifier 104 amplifies data secondarily mapped to the radio resources by mapping section 103 to the transmission power level concerning which transmission power amplifier 104 is notified by mapping section 103 and outputs the amplified data.

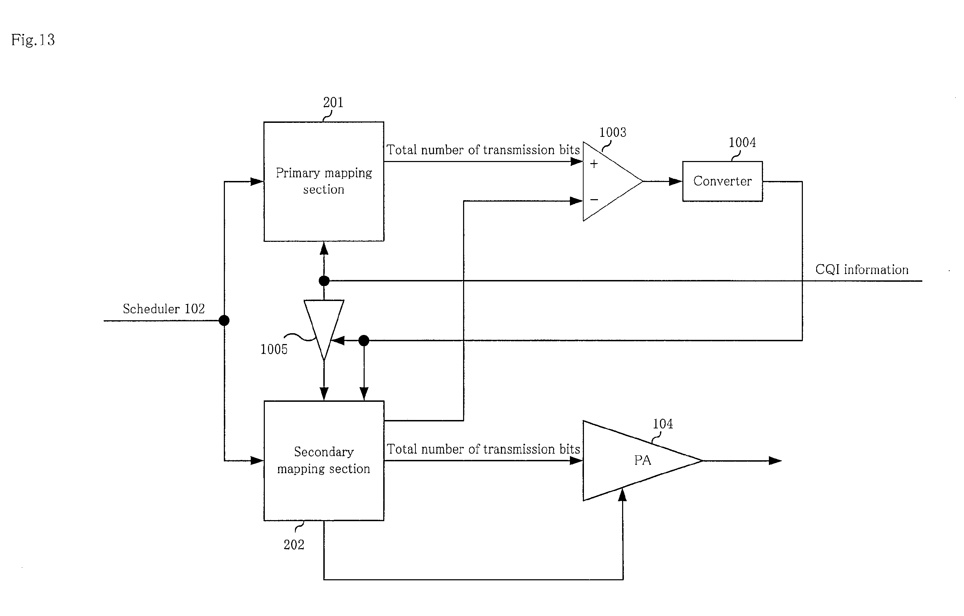

Next, an example of the mapping operation that mapping section 103 performs will be described in detail. In this example, mapping section 103 is feed-back controlled. Fig. 13 is a schematic diagram describing an example of the mapping operation.

Referring to Fig. 13, primary mapping section 201 performs the ordinary adaptive modulation for data supplied from scheduler 102 based on the CQI information obtained from wireless terminals 811 to 81n and maps the decided modulation schemes to the radio resources. Primary mapping section 201 inputs the resultant total number of transmission bits to comparator 1003.

Another input to comparator 1003 is the total number of transmission bits that secondary mapping section 202 has obtained as a result of the adaptive modulation using the blank resources. Comparator 1003 compares the two inputs and supplies a compared result that represents the larger total number of transmission bits to converter 1004. An output of converter 1004 is supplied to CQI converter 1005.

Converter 1004 and CQI converter 1005 serve to convert the CQI information supplied from wireless terminals 811 to 81n into data as follows. If the total number of transmission bits that is output from primary mapping section 201 is smaller than the total number of transmission bits that is output from secondary mapping section 202, the CQI information is converted into data such that CQI is decreased. In contrast, if the total number of transmission bits that is output from primary mapping section 201 is greater than the total number of transmission bits that is output from secondary mapping section 202, the CQI information is converted into data such that CQI is increased. The converted CQI information is input to secondary mapping section 202.

If there are blank resources in the radio resources as a result of the mapping performed by primary mapping section 201, the feedback loop decreases CQI of a resource block containing the blank resources. However, since the total number of transmission bits does not vary, secondary mapping section 202 performs the adaptive modulation such that the transmission power density becomes constant and small in the resource block under the restriction condition of the number of transmission bits. As a result, since the modulation orders are decreased, the transmission power level concerning which transmission power amplifier 1006 is notified is decreased and thereby power saving is accomplished.

Next, an operation that is successively performed by primary mapping section 201 and secondary mapping section 202 will be described. In this operation, primary mapping section 201 performs a process that applies adaptive modulation to the radio resources based on the CQI information, whereas secondary mapping section 202 performs a process that applies adaptive modulation to the radio resources such that blank resources are also used and the transmission power density becomes constant and small under a restriction condition of the total number of transmission bits.

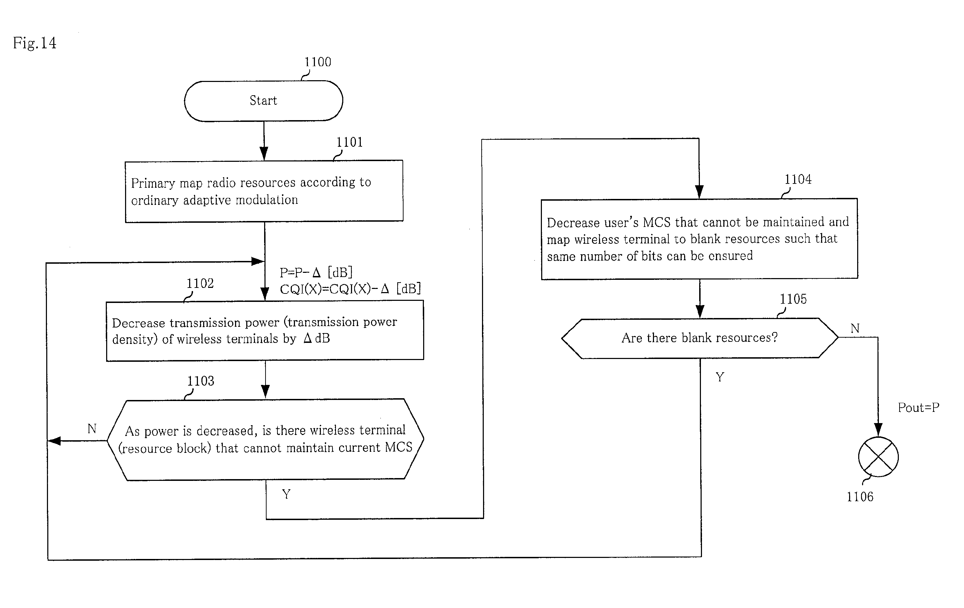

Fig. 14 is a flow chart showing an example of the operation that mapping section 103 performs as primary mapping section 201 and secondary mapping section 202 that successively try to perform processes.

When the operation starts (at step 1100), primary mapping section 201 performs the primary mapping that applies the adaptive modulation based on the CQI information obtained from wireless terminals 811 to 81n to the radio resources (at step 1101).

Thereafter, mapping section 103 decreases the transmission power of all signals to wireless terminals 811 to 81n, namely the transmission power density, by $\Delta$dB (at step 1102). The adaptive modulation is controlled as MCS that is a set of a modulation scheme and a coding scheme referred to as adaptive modulation coding set including adaptive coding in which as MCS rises, the modulation order and coding ratio rise.

Mapping section 103 determines whether or not wireless terminal 811 to 81n (resource block) that cannot maintain the current MCS occurs as a result of the decreased transmission power density (at step 1103). If such a wireless terminal does not emerge, mapping section 103 repeatedly decreases the transmission power density and the corresponding CQI level by $\Delta$ until a wireless terminal (resource block) that cannot maintain the MCS emerges.

If wireless terminal (resource block) 811 to 81n that cannot maintain the MCS emerges, mapping section 103 decreases MCS of the wireless terminal (resource block) and maps blank resources to the wireless terminal such that the same number of transmission bits can be maintained (at step 1104).

Thereafter, mapping section 103 determines whether or not there are blank resources (at step 1105). If there are still blank resources, mapping section 103 returns to step 1102. Thereafter, mapping section 103 decreases the transmission power density and the corresponding CQI level by Δ and repeats the same process until there are no blank resources.

If there is no blank resource block, mapping section 103 notifies transmission power amplifier 104 of the transmission power level corresponding to the transmission power density that was decreased and completes the process (at step 1106).

As the transmission power density of all the radio resources is decreased, although the scheduling metrics are large, it is likely that data that are not mapped to the radio resources emerge because of bad channel quality. Thus, for data to be queued and transmitted to a wireless terminal having large scheduling metrics, the transmission power density of a resource block allocated by the primary mapping may be maintained, not mapped by the secondary mapping. As a result, since secondary mapping section 202 is prevented from stopping the transmission of data to a wireless terminal having large scheduling metrics, the data can be transmitted to the wireless terminal.

In addition, wireless terminals 811 to 81n demodulate received data based on the power level of a reference signal that is referred to as a pilot signal and that is supplied from base station 810. As base station 810 decreases the transmission power density of a signal transmitted to wireless terminals 811 to 81n, wireless terminals 811 to 81n cannot receive the signal in the expected power level based on the power level of the pilot signal. As a result, it is likely that wireless terminals 811 to 81n cannot correctly demodulate data. To prevent this situation, from occurring base station 810 may transmit the difference between the transmission power density of the pilot signal and the transmission power density of data as a control signal to wireless terminals 811 to 81n. Wireless terminals 811 to 81n may adjust the expected reception level based on the control signal. As a result, wireless terminals 811 to 81n can correctly demodulate a signal having a transmission power level that base station 810 decreases for power saving into the original data.

Resource block x in the foregoing theoretical description can be substituted with time t. When the foregoing analysis is performed with such a substitution, the condition that minimizes the amount of power consumption J can be given by the following formula.

[Mathematical Expression 42]

$$\frac{\partial^2 G(y')}{\partial t \, \partial y'} = \frac{\partial^2 G(y')}{\partial y'^2} \cdot \frac{\partial y'}{\partial t} = 0 \quad (36)$$

In other words, the condition that minimizes the total amount of power consumption J is given by the following formula.

[Mathematical Expression 43]

$$\frac{\partial y'}{\partial t} = \frac{\partial f(t)}{\partial t} = 0 \quad (37)$$

The foregoing formula can also be expressed as follows.

[Mathematical Expression 44]

$$f(t) = Const. \quad (38)$$

If b [bits] are transmitted in time T, with a constant of

[Mathematical Expression 45]

$$f(t) = \frac{b}{T} \quad (39)$$

when b [bits] are equally transmitted in time T, the total amount of power consumption J becomes minimal.

This theory will be described by using a simple example.

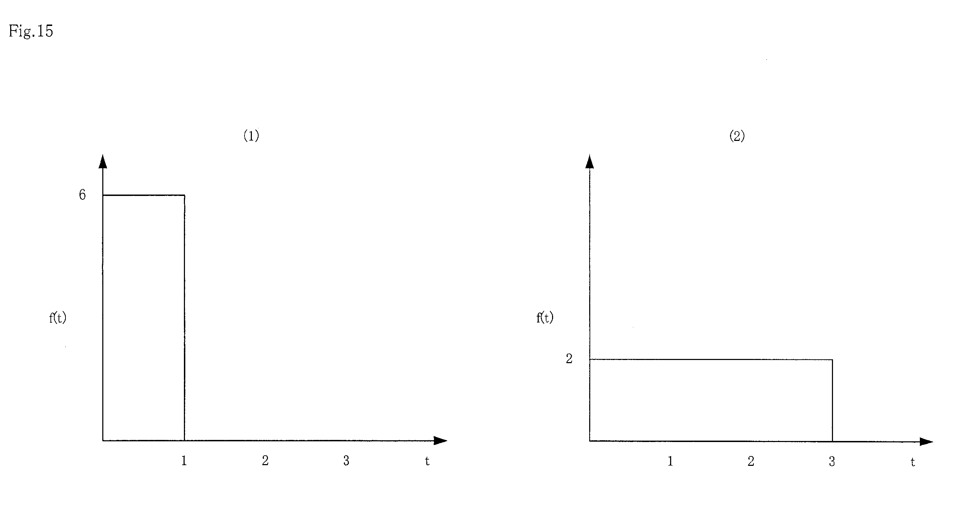

Here, two transmission methods (1) and (2) shown in Fig. 15 are compared. In the transmission method (1), data of b [bits] are transmitted in a high modulation order and then transmission power amplifier 104 is turned off. It is assumed that 64QAM is applied as high-order modulation. In the transmission method (2), data of b [bits] are equally transmitted in a low modulation order in time T. It is assumed that QPSK is applied as low-order modulation.

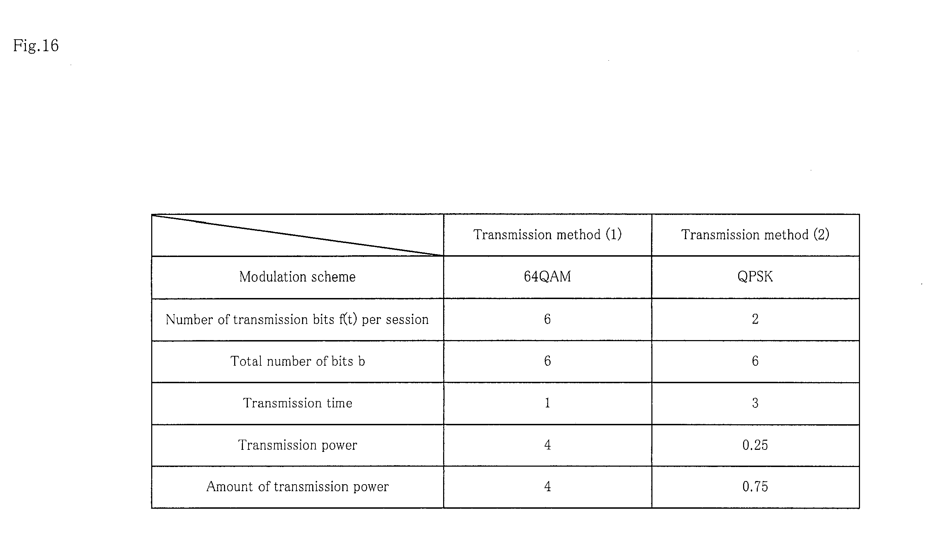

In both transmission methods (1) and (2), the total number of transmission bits b is 6. Fig. 16 is a table that shows the conditions of the transmission methods (1) and (2) and the amounts of transmission power as obtained results.

In transmission method (1), since the modulation scheme is 64 QAM, data of 6 bits can be transmitted at a time. Thus, transmission time t is equal to a period of one transmission session. Since the transmission power amplifier is turned off thereafter, no power consumption occurs.

In the transmission method (2), data are equally transmitted in time T according to QPSK that is low-order modulation. Since the modulation scheme is QPSK, data is transmitted 2 bits at a time and thereby the transmission time is equal to a period of three transmission sessions.

The transmission power of QPSK is 0.25, while the transmission power of 64QAM is 0.25 x 4 x 4 because the number of transmission bits of 64QAM is greater than that of QPSK by 4 bits. Thus, while the amount of transmission power in the transmission method (1) is 4, the transmission power in the transmission method (2) is 0.75 that is remarkably smaller than that of the former. This decrease denotes that the theory described using Formulas (38) and (39) is satisfied. In other words, it is clear that by equalizing the traffic and using a low-order modulation scheme corresponding to the equalized traffic, power saving can be accomplished.

This discovery can be applied to the foregoing base station. For example, primary mapping section 201 can estimate the amount of traffic of transmission data, restrict the amount of data to be mapped to the radio resources corresponding to the amount of traffic, and equalize the amount of data with respect to time. Since the amount of data that secondary mapping section 202 maps to the radio resources is restricted by the total number of transmission bits obtained by primary mapping section 201, data that are supplied from mapping section 103 are equalized with respect to time.

Alternatively, primary mapping section 201 may estimate the amount of traffic based on the use rate of the radio resources. Further alternatively, primary mapping section 201 may estimate the amount of traffic based on the queue length of the transmission data that are stored in transmission buffer 101. Primary mapping section 201 needs to map the data having the amount of data corresponding to the queue length to the radio resources.

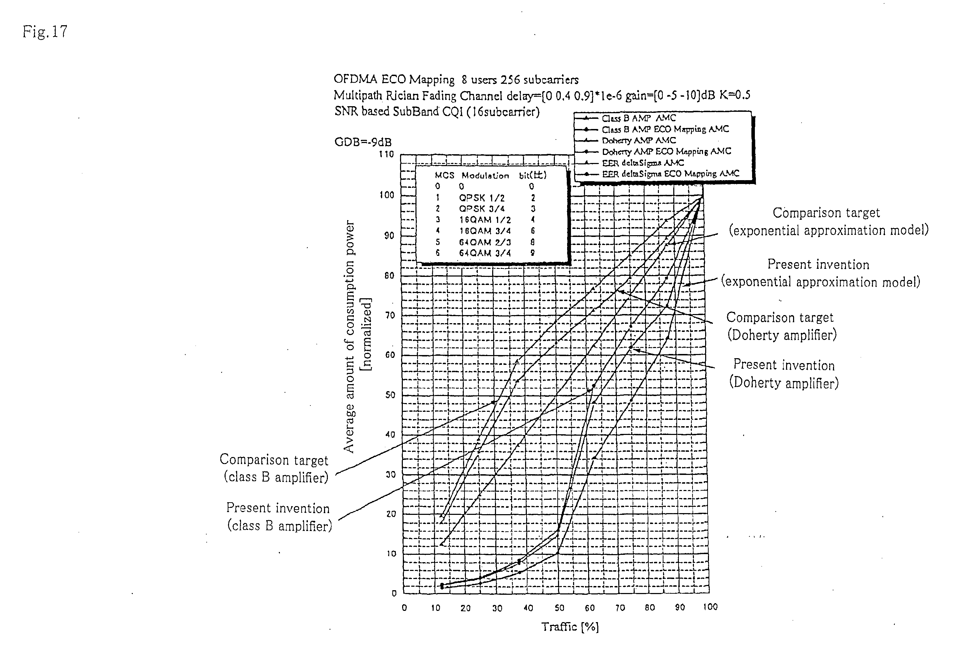

Now that the effect in which power saving can be accomplished by this embodiment has been described using numeric values. Next, the effect of power saving will be clarified using a simulation. Fig. 17 is a graph showing a simulation result that represents an effect of power saving.

In this simulation, feedback control as described with reference to Fig. 13 is used. In this simulation, the number of wireless terminals is 8 and the number of subcarriers is 256. One resource block contains 16 subcarriers in the frequency direction. As an environmental condition of wireless channels, channels on which frequency selective high speed fading occurs are simulated.

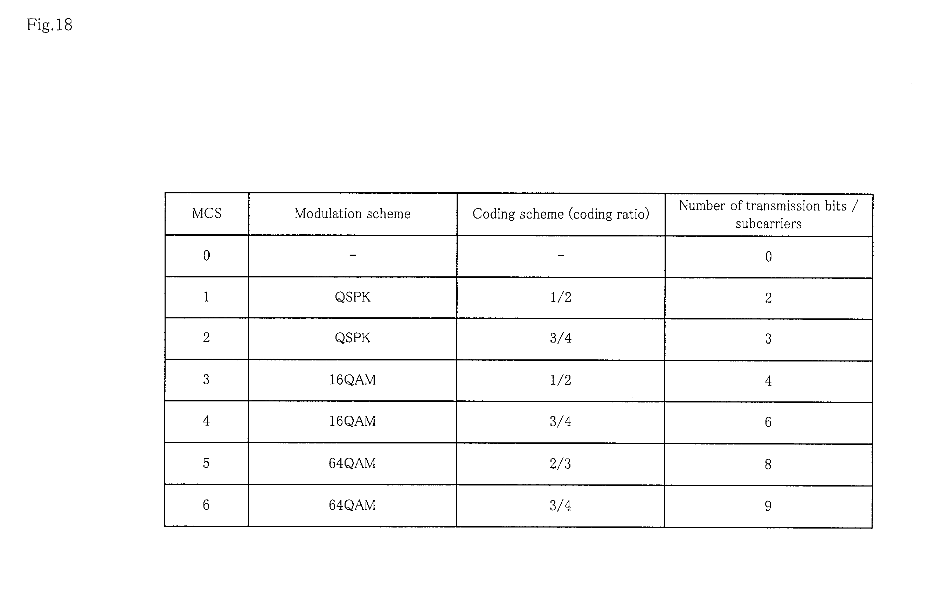

Channel qualities vary with resource blocks. As MCS, in addition to a plurality of combinations of coding schemes (coding rates), QPSK, 16QAM, and 64QAM are used in seven levels from 0 to 6. Fig. 18 is a table of MCS used in the simulation.

The base station is notified of CQI as sub-band CQI of each resource block. Scheduling is performed for each sub-band. Data to be transmitted to wireless terminals having high scheduling metrics are mapped to the radio resources with higher priorities.

Three types of transmission power amplifiers are used: exponential approximation model, Doherty amplifier, and class B amplifier. The exponential approximation model is an approximation of the Shannon's capacity formula based on the information theory and was used as an ideal model. The Doherty amplifier and class B amplifier were used as real transmission amplifier models.

Ordinary adaptive modulation coding based on MCS that is the same as the adaptive modulation coding of the present invention is used as a comparison target with which the embodiment of the present invention is compared with respect to the effect of reducing power consumed by the transmission power amplifiers. In the comparison target, when there are blank resources in the radio resources, the transmission power amplifier is turned off so as to prevent the wasteful consumption of power.

The graph of Fig. 17 shows that the amount of power consumption of the embodiment of the present invention remarkably decreases in comparison with that of the comparison target as the amount of traffic decreases. When the amount of traffic becomes 50 %, the amount of power consumption of the embodiment of the present invention becomes around 1/4 that of the comparison target. This tendency applies to not only the ideal exponential approximation model, but also the real transmission power amplifier models, which are Doherty amplifier and class B amplifier.

The foregoing simulation result denotes that power saving of the present invention is effective. In addition, it denotes that power saving of the present invention is effective not only to the ideal exponential approximation model, but also to the real transmission power amplifier models.

Part or all of the foregoing embodiment can be described as the following supplements. However, it should be appreciated that the present invention is not limited to the following supplements.

(Supplement 1)

A base station that employs adaptive modulation to connect to a wireless terminal, comprising:

first processing means that decides a target value of the total number of bits of traffic to be transmitted to said wireless terminal, the target value being mapped to radio resources; and
a second processing means that decides a modulation scheme for said wireless terminal according to the adaptive modulation such that the total number of bits to be transmitted is restricted based on said target value, blank resources of said radio resources are decreased, and a transmission power density becomes constant and small.

(Supplement 2)

The base station as set forth in supplement 1,
wherein said first processing means decides the total number of bits in which a modulation scheme for said wireless terminal is decided according to preliminary adaptive modulation process as said target value, and
wherein when said modulation scheme that is decided according to said preliminary adaptive modulation process is mapped to said radio resources, if blank resources exist in said radio resources, said second processing means decides a modulation scheme for said wireless terminal that is decided according to secondary adaptive modulation that includes and utilizes said blank resources such that said total number of bits is restricted, said transmission power density becomes constant and small.

(Supplement 3)

The base station as set forth in supplement 2,
wherein said first processing means performs said preliminary adaptive modulation process based on channel quality information, and
wherein said second processing means performs said secondary adaptive modulation such that said blank resources are also used, said transmission power density becomes constant and small, and the total number of bits obtained by said secondary adaptive modulation based on said channel quality becomes close to the total number of bits obtained by said preliminary adaptive modulation process.

(Supplement 4)

The base station as set forth in supplement 3,
wherein said second processing means successively tries to control the adaptive modulation for a plurality of wireless terminals that have different channel qualities such that said total number of bits obtained by said second adaptive modulation matches the total number of bits obtained by said preliminary adaptive modulation process.

(Supplement 5)

The base station as set forth in supplement 3 or 4,
wherein said second processing means controls the adaptive modulation for wireless terminals whose priorities are greater than a predetermined threshold such that the transmission power density decided by said first processing means is maintained.

(Supplement 6)

The base station as set forth in any one of supplements 1 to 5, further comprising:

control signal communication means that transmits a control signal that represents the difference between the power density of a transmission pilot signal and said transmission power density obtained by said second processing means.

(Supplement 7)

The base station as set forth in any one of supplements 1 to 6,
wherein said first processing means decides said target value corresponding to the amount of traffic to be transmitted to said wireless terminal.

(Supplement 8)

The base station as set forth in supplement 7,
wherein said first processing means decides said blank resources or the ratio of usable radio resources to all of said radio resources corresponding to said amount of traffic to be transmitted and decides said target value by mapping using the usable radio resources.

(Supplement 9)

The base station as set forth in any one of supplements 1 to 6,
wherein said first processing means decides said target value corresponding to the length of a queue of a transmission buffer that temporarily stores data to be transmitted.

(Supplement 10)

The base station as set forth in supplement 9,
wherein said first processing means decides said blank resources or the ratio of usable radio resources to all of said radio resources corresponding to said length of queue and decides said target value by mapping using the usable radio resources.

(Supplement 11)

The base station as set forth in any one of supplements 1 to 10,
wherein said second processing means controls said adaptive modulation such that said transmission power density becomes a constant value in a predetermined range.

(Supplement 12)

The base station as set forth in any one of supplements 1 to 11,
wherein said radio resources are a region defined in a frequency direction, a time direction, or in both the frequency and time directions.

(Supplement 13)

An adaptive modulation control method for a base station that employs adaptive modulation to connect to a wireless terminal, comprising:

deciding a target value of the total number of bits of traffic to be transmitted to said wireless terminal, the target value being mapped to radio resources; and
deciding a modulation scheme for said wireless terminal according to the adaptive modulation such that the total number of bits to be transmitted is restricted based on said target value, blank resources of said radio resources are decreased, and a transmission power density becomes constant and small.

With reference to the embodiments, the present invention has been described. However, it should be understood by those skilled in the art that the structure and details of the present invention may be changed in various manners without departing from the scope of the present invention.

The present application claims a priority based on Japanese Patent Application JP 2010-037097 filed on February 23, 2010, the entire contents of which are incorporated herein by reference in its entirety.

**Claims**

1. A base station that employs adaptive modulation to connect to a wireless terminal, comprising:

   first processing means that decides a target value of the total number of bits of traffic to be transmitted to said wireless terminal, the target value being mapped to radio resources; and
   a second processing means that decides a modulation scheme for said wireless terminal according to the adaptive modulation such that the total number of bits to be transmitted is restricted based on said target value, blank resources of said radio resources are decreased, and a transmission power density becomes constant and small.

2. The base station as set forth in claim 1,
   wherein said first processing means decides the total number of bits in which a modulation scheme for said wireless terminal is decided according to preliminary adaptive modulation process as said target value, and
   wherein when said modulation scheme that is decided according to said preliminary adaptive modulation process is mapped to said radio resources, if blank resources exist in said radio resources, said second processing means decides a modulation scheme for said wireless terminal that is decided according to secondary adaptive modulation that includes and utilizes said blank resources such that said total number of bits is restricted, said transmission power density becomes constant and small.

3. The base station as set forth in claim 2,
   wherein said first processing means performs said preliminary adaptive modulation process based on channel quality information, and
   wherein said second processing means performs said secondary adaptive modulation such that said blank resources are also used, said transmission power density becomes constant and small, and the total number of bits obtained by said secondary adaptive modulation based on said channel quality becomes close to the total number of bits obtained by said preliminary adaptive modulation process.

4. The base station as set forth in claim 3,
   wherein said second processing means successively tries to control the adaptive modulation for a plurality of wireless terminals that have different channel qualities such that said total number of bits obtained by said second adaptive modulation matches the total number of bits obtained by said preliminary adaptive modulation process.

5. The base station as set forth in claim 3 or 4,
   wherein said second processing means controls the adaptive modulation for wireless terminals whose priorities are greater than a predetermined threshold such that the transmission power density decided by said first processing means is maintained.

6. The base station as set forth in any one of claims 1 to 5, further comprising:

   control signal communication means that transmits a control signal that represents the difference between the power density of a transmission pilot signal and said transmission power density obtained by said second processing means.

7. The base station as set forth in any one of claims 1 to 6,
   wherein said first processing means decides said target value corresponding to the amount of traffic to be transmitted to said wireless terminal.

8. The base station as set forth in claim 7,
   wherein said first processing means decides said blank resources or the ratio of usable radio resources to all of said radio resources corresponding to said amount of traffic and decides said target value by mapping using the usable radio resources.

**9.** The base station as set forth in any one of claims 1 to 6,
wherein said first processing means decides said target value corresponding to the length of a queue of a transmission buffer that temporarily stores data to be transmitted.

**10.** The base station as set forth in any one of claims 1 to 9,
wherein said second processing means controls said adaptive modulation such that said transmission power density becomes a constant value in a predetermined range.

Fig.1

EP 2 541 984 A1

Transmitter                    2000        Channel              2010        Receiver                    2020

Gain varying
with time        Noise                                          Reception
signal

Transmission                                                              Demodulation
signal          Adaptive        Power                                      and decoding
                modulation      control
                and coding                    ⊗          ⊕
                                                                          Channel
                                                                          estimation

Estimated value of channel quality

                                            Feedback channel              2030

                                                        Feedback

Fig.2

Base station 11

Wireless terminal 12

Wireless terminal 12

Wireless terminal 12

Fig.3

11

Base station

21

Primary processing section

23

Control signal communication section

22

Secondary processing section

Fig.4

Fig.5

$$f(x) = \frac{dF(x)}{dx} = y'$$

EP 2 541 984 A1

Fig.6

Fig.7

Total 18W

20 bits

| | | | | | |
|1|4|4|4|4|1|
|QPS|16QAM|16QAM|16QAM|16QAM|QPS|

Total Resource

Total 49W

20 bits

| | | | |
|16|16|16|1|
|64QAM|64QAM|64QAM|QPS|

Total Resource

Fig.8A

| x (resource No.) | 1 | 2 | 3 | 4 | 5 | 6 | 7 | 8 | 9 | 10 | | Total |
|---|---|---|---|---|---|---|---|---|---|---|---|---|

**Ordinary adaptive modulation**

| | 1 | 2 | 3 | 4 | 5 | 6 | 7 | 8 | 9 | 10 | | Total |
|---|---|---|---|---|---|---|---|---|---|---|---|---|
| f(x) bits | 2 | 4 | 6 | 4 | 8 | 6 | 8 | 0 | 0 | 0 | | 38 bits |
| G(f(x))/Ph(x) transmission power | 10 | 10 | 10 | 10 | 10 | 10 | 10 | 0 | 0 | 0 | | 70 W |
| Ph(x) | 1 | 4 | 16 | 4 | 64 | 16 | 64 | 16 | 64 | 16 | | |

**Adaptive modulation of present invention**

| | 1 | 2 | 3 | 4 | 5 | 6 | 7 | 8 | 9 | 10 | | Total |
|---|---|---|---|---|---|---|---|---|---|---|---|---|
| f(x) bits | 0 | 2 | 4 | 2 | 6 | 4 | 6 | 4 | 6 | 4 | | 38 bits |
| G(f(x))/Ph(x) transmission power | 0 | 2.5 | 2.5 | 2.5 | 2.5 | 2.5 | 2.5 | 2.5 | 2.5 | 2.5 | | 22.5 W |
| Ph(x) | 1 | 4 | 16 | 4 | 64 | 16 | 64 | 16 | 64 | 16 | | |

**Equal bit allocation adaptive modulation**

| | 1 | 2 | 3 | 4 | 5 | 6 | 7 | 8 | 9 | 10 | | Total |
|---|---|---|---|---|---|---|---|---|---|---|---|---|
| f(x) bits | 2 | 4 | 4 | 4 | 4 | 4 | 4 | 4 | 4 | 4 | | 38 bits |
| G(f(x))/Ph(x) transmission power | 10 | 10 | 2.5 | 10 | 0.625 | 2.5 | 0.625 | 2.5 | 0.625 | 2.5 | | 41.88 W |
| Ph(x) | 1 | 4 | 16 | 4 | 64 | 16 | 64 | 16 | 64 | 16 | | |

Fig.8B

x resource No.

Ordinary adaptive modulation

| | 1 | 2 | 3 | 4 | 5 | 6 | 7 | 8 | 9 | 10 | Total |
|---|---|---|---|---|---|---|---|---|---|---|---|
| f(x) bits | 2 | 4 | 6 | 4 | 8 | 6 | 8 | 0 | 0 | 0 | 38 bits |
| G(f(x))/Ph(x) transmission power | 1 | 4 | 16 | 4 | 64 | 16 | 64 | 0 | 0 | 0 | 169 W |

Adaptive modulation of present invention = equal bit allocation adaptive modulation

| | 1 | 2 | 3 | 4 | 5 | 6 | 7 | 8 | 9 | 10 | |
|---|---|---|---|---|---|---|---|---|---|---|---|
| f(x) bits | 2 | 4 | 4 | 4 | 4 | 4 | 4 | 4 | 4 | 4 | 38 bits |
| G(f(x))/Ph(x) transmission power | 1 | 4 | 4 | 4 | 4 | 4 | 4 | 4 | 4 | 4 | 37 W |
| Ph(x) | 1 | 1 | 1 | 1 | 1 | 1 | 1 | 1 | 1 | 1 | |

Fig.9A

x (resource No.)

| | 1 | 2 | 3 | 4 | 5 | 6 | 7 | 8 | 9 | 10 |
|---|---|---|---|---|---|---|---|---|---|----|

Ordinary adaptive modulation

Total

| | 1 | 2 | 3 | 4 | 5 | 6 | 7 | 8 | 9 | 10 |
|---|---|---|---|---|---|---|---|---|---|----|
| f(x) bits | 2 | 4 | 6 | 8 | 6 | 8 | 6 | 0 | 0 | 0 |
| G(f(x))/Ph(x) transmission power | 10 | 10 | 10 | 10 | 10 | 10 | 10 | 0 | 0 | 0 |
| Ph(x) | 1 | 4 | 16 | 64 | 16 | 64 | 16 | 16 | 64 | 4 |

40 bits

70 W

Adaptive modulation of present invention

| | 1 | 2 | 3 | 4 | 5 | 6 | 7 | 8 | 9 | 10 |
|---|---|---|---|---|---|---|---|---|---|----|
| f(x) bits | 0 | 3 | 4 | 6 | 4 | 6 | 4 | 4 | 6 | 3 |
| G(f(x))/Ph(x) transmission power | 0 | 5 | 2.5 | 2.5 | 2.5 | 2.5 | 2.5 | 2.5 | 2.5 | 5 |
| Ph(x) | 1 | 4 | 16 | 64 | 16 | 64 | 16 | 16 | 64 | 4 |

40 bits

27.5 W

Equal bit allocation adaptive modulation

| | 1 | 2 | 3 | 4 | 5 | 6 | 7 | 8 | 9 | 10 |
|---|---|---|---|---|---|---|---|---|---|----|
| f(x) bits | 4 | 4 | 4 | 4 | 4 | 4 | 4 | 4 | 4 | 4 |
| G(f(x))/Ph(x) transmission power | 40 | 10 | 2.5 | 0.625 | 2.5 | 0.625 | 2.5 | 2.5 | 0.625 | 10 |
| Ph(x) | 1 | 4 | 16 | 64 | 16 | 64 | 16 | 16 | 64 | 4 |

40 bits

71.88 W

Fig.9B

| x resource No. | 1 | 2 | 3 | 4 | 5 | 6 | 7 | 8 | 9 | 10 |
|---|---|---|---|---|---|---|---|---|---|---|
| **Ordinary adaptive modulation** | | | | | | | | | | |

| | 1 | 2 | 3 | 4 | 5 | 6 | 7 | 8 | 9 | 10 | Total |
|---|---|---|---|---|---|---|---|---|---|---|---|
| f(x) bits | 2 | 4 | 6 | 8 | 6 | 8 | 6 | 0 | 0 | 0 | 40 bits |
| G(f(x))/Ph(x) transmission power | 1 | 4 | 16 | 64 | 16 | 64 | 16 | 0 | 0 | 0 | 181 W |

Adaptive modulation of present invention = equal bit allocation adaptive modulation

| | 1 | 2 | 3 | 4 | 5 | 6 | 7 | 8 | 9 | 10 | Total |
|---|---|---|---|---|---|---|---|---|---|---|---|
| f(x) bits | 4 | 4 | 4 | 4 | 4 | 4 | 4 | 4 | 4 | 4 | 40 bits |
| G(f(x))/Ph(x) transmission power | 4 | 4 | 4 | 4 | 4 | 4 | 4 | 4 | 4 | 4 | 40 W |
| Ph(x) | 1 | 1 | 1 | 1 | 1 | 1 | 1 | 1 | 1 | 1 | |

Fig.10

Fig.11

101 Transmission buffer

102 Scheduler

103

104

Mapping section

PA

Pout

CQI

Wireless terminal
811-81n

Fig.12

103

Mapping section

Primary mapping section

Secondary mapping section

201

202

Fig.13

EP 2 541 984 A1

Fig.14

Start — 1100

Primary map radio resources according to ordinary adaptive modulation — 1101

P=P-Δ [dB]
CQI(X)=CQI(X)-Δ [dB]

Decrease transmission power (transmission power density) of wireless terminals by Δ dB — 1102

As power is decreased, is there wireless terminal (resource block) that cannot maintain current MCS — 1103

N

Y

Decrease user's MCS that cannot be maintained and map wireless terminal to blank resources such that same number of bits can be ensured — 1104

Are there blank resources? — 1105

Y

N

Pout=P

1106

EP 2 541 984 A1

Fig.15

EP 2 541 984 A1

(1)

(2)

Fig.16

|  | Transmission method (1) | Transmission method (2) |
|---|---|---|
| Modulation scheme | 64QAM | QPSK |
| Number of transmission bits f(t) per session | 6 | 2 |
| Total number of bits b | 6 | 6 |
| Transmission time | 1 | 3 |
| Transmission power | 4 | 0.25 |
| Amount of transmission power | 4 | 0.75 |

Fig.17

Fig.18

EP 2 541 984 A1

| MCS | Modulation scheme | Coding scheme (coding ratio) | Number of transmission bits / subcarriers |
|---|---|---|---|
| 0 | – | – | 0 |
| 1 | QSPK | 1/2 | 2 |
| 2 | QSPK | 3/4 | 3 |
| 3 | 16QAM | 1/2 | 4 |
| 4 | 16QAM | 3/4 | 6 |
| 5 | 64QAM | 2/3 | 8 |
| 6 | 64QAM | 3/4 | 9 |

## INTERNATIONAL SEARCH REPORT

| | International application No. |
|---|---|
| | PCT/JP2011/053933 |

**A. CLASSIFICATION OF SUBJECT MATTER**
*H04W28/18*(2009.01)i, *H04L27/00*(2006.01)i

According to International Patent Classification (IPC) or to both national classification and IPC

**B. FIELDS SEARCHED**

Minimum documentation searched (classification system followed by classification symbols)
H04W28/18, H04L27/00

Documentation searched other than minimum documentation to the extent that such documents are included in the fields searched
Jitsuyo Shinan Koho          1922–1996     Jitsuyo Shinan Toroku Koho     1996–2011
Kokai Jitsuyo Shinan Koho     1971–2011     Toroku Jitsuyo Shinan Koho     1994–2011

Electronic data base consulted during the international search (name of data base and, where practicable, search terms used)
IEEE

**C. DOCUMENTS CONSIDERED TO BE RELEVANT**

| Category* | Citation of document, with indication, where appropriate, of the relevant passages | Relevant to claim No. |
|---|---|---|
| A | JP 2008-252282 A  (Kyocera Corp.), 16 October 2008 (16.10.2008), paragraph [0030] (Family: none) | 1-10 |
| A | Jong-Pil Yoon et al., Efficient Uplink Resource Allocation for Power Saving in IEEE 802.16 OFDMA Systems, Vehicular Technology Conference, 2008. VTC Spring 2008. IEEE, 2008, Pages 2167 - 2171 | 1-10 |
| A | WO 2009/122518 A1  (Fujitsu Ltd.), 08 October 2009 (08.10.2009), abstract (Family: none) | 1-10 |

☒  Further documents are listed in the continuation of Box C.          ☐  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 May, 2011 (20.05.11) | 31 May, 2011 (31.05.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

EP 2 541 984 A1

**INTERNATIONAL SEARCH REPORT**

International application No.

PCT/JP2011/053933

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-284536 A (Panasonic Corp.),<br>03 December 2009 (03.12.2009),<br>abstract<br>& JP 2009-284536 A      & US 2002/0123349 A1<br>& EP 1523111 A1      & DE 60110020 D<br>& AU 7460601 A      & CN 1555136 A | 1-10 |
| A | WO 2009/157481 A1 (Kyocera Corp.),<br>30 December 2009 (30.12.2009),<br>abstract<br>& JP 2010-10969 A | 1-10 |

Form PCT/ISA/210 (continuation of second sheet) (July 2009)

45

## REFERENCES CITED IN THE DESCRIPTION

### Patent documents cited in the description

- JP 2008252282 A

- JP 2010037097 A

### Non-patent literature cited in the description

- **ANDREA GOLDSMITH.** Goldsmith Wireless Communication Engineering. Maruzen, 2007, 369-389

- **W. KIM ; J. YOON ; J. BAEK ; Y. SUH.** Power Efficient Uplink Resource Allocation Schemes in IEEE 802.16 OFDMA Systems. *IEICE Transactions on Communications,* September 2009, vol. E92-B (9), 2891-2902